(19) Europäisches Patentamt / European Patent Office / Office européen des brevets

(11) **EP 2 543 254 A1**

(12) **EUROPEAN PATENT APPLICATION**

(43) Date of publication:
**09.01.2013 Bulletin 2013/02**

(51) Int Cl.:
*A23C 3/033* (2006.01)     *A23L 3/32* (2006.01)

(21) Application number: **11173191.5**

(22) Date of filing: **08.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nestec S.A.**
**1800 Vevey (CH)**

(72) Inventors:
• **Mathys, Alexander**
  **1005 Lausanne (CH)**
• **Toepfl, Stefan**
  **49080 Osnabrueck (DE)**

• **Siemer, Claudia**
  **49393 Lohne (DE)**
• **Favre, Laurent**
  **1077 Servion (CH)**
• **Benyacoub, Jalil**
  **1066 Epalinges (CH)**
• **Hansen, Carl Erik**
  **1066 Epalinges (CH)**

(74) Representative: **Marquardt, Ulf**
**Nestec S.A.**
**IP Department**
**Avenue Nestlé 55**
**1800 Vevey (CH)**

(54) **Pulsed electric field treatment process and dairy product comprising bioactive molecules obtainable by the process**

(57) The present invention addresses the problem of inactivation of bioactive components in milk during pasteurization for preservation. The invention discloses a method of pulsed electric field (PEF) treatment of whole milk, skimmed milk, semi-skimmed milk or whey, or other liquid compositions comprising milk components or fractions. The invention is based on the finding that by selecting one or more specific process parameters, such as the PEF treatment chamber design, the specific energy applied, the field strength, pulse type, start temperature, it is possible to effectively eliminate microorganisms from the composition while conserving the activity of bioactive components in the composition.

EP 2 543 254 A1

## Description

The present invention relates to a method for reducing the microbial load in a liquid or viscous composition, to a method for increasing shelf life of a liquid or viscous composition, to a pulsed-electric field (PEF) pasteurisation method, to a PEF-treated composition and further methods and compositions.

## The Background Art and Problems to be Solved by the Invention

Microbiological safety is the most important requirement for food. Microorganisms that can be found in food can cause manifold diseases, such as, for example listeriosis. High nutritional, functional values as well as good taste are further important requirements for food. Conventional production and preservation processes ensure the microbiological safety, but the taste and the nutritional content are influenced in a negative way due to these processes. Consequently, new processes must be developed to minimize the influence of a process on the nutritional and healthy components. Additionally, the demands for new processes are for them to be ecological and economically justifiable.

Milk is a nutritionally valuable food, comprising - besides essential macronutrients - vitamins and further bioactive molecules with health promoting properties or activities that are in various ways beneficial to the consumer. Traditionally, and in large scale processes, the microbiological safety of milk is warranted by thermal pasteurisation or ultra-high heat treatment (UHT). Both processes result in a substantial degradation of bioactive molecules that are naturally present in milk, as is reported abundantly in the literature. In particular, many vitamins and bioactive proteins that are naturally present in milk are sensitive to heat. Furthermore, preservation methods that use heat to preserve foods unfavorably affect the flavor of the food.

Hence, new preservation methods are required, which preferably do not use heat for preservation. One possible non thermal preservation process is the application of pulsed electric fields (PEF). This method uses the electrical current to inactivate microorganisms and to maintain the microbiological safety of foods. The ingredients and the flavor are mostly not influenced by this method. The mechanism behind the process to inactivate microorganisms is called electroporation. Due to the alternating electric field with high voltages, the cell membrane is permeabilized and a cell lysis is the result.

M. Walking-Ribeiro et al., Int. J. Food Microbiol. 144 (2011) 379-386, compare and combine the efficiency of PEF treatment, microfiltration and conventional thermal pasteurization on microbial inactivation. This publication does not discuss the loss of bioactive molecules associated with the different treatments and indeed, the conditions used for PEF treatment of milk in this publication make it unlikely that bioactive molecules keep their activity in the course of the process.

US 2008/0317823 propose a method of pressure treating a bioactive composition in order to increase its keeping (shelf life). The pressure treatments disclosed in this document are energy and cost extensive. Furthermore, pressure treatments are batch wise processes, and it would be advantageous to have a continuous treatment for increasing the microbial safety of milk-based products.

Toepfl, S., Heinz, V. und Knorr, D. (2006) describe the current knowledge on applications of pulsed electric field technology for the food industry in: Pulsed Electric Field Treatment of Foods, Ed: Raso, J. und Heinz, V., p. 197-221, Elsevier, Oxford, UK.

In view of the above, it is an objective of the present invention to provide a method for reducing microbial load in a liquid or viscous food comprising bioactive molecules, while maintaining the activity and functionality of bioactive molecules present in the food.

In other words, it is an objective to provide a method for increasing or warranting the microbiological safety of a liquid or viscous composition comprising bioactive molecules, wherein said method does not or not to an important extent reduce activity or content of bioactive molecules that are present in the food.

It is an objective of the present invention to specifically conserve the biological activity of bioactive molecules that are naturally present in milk. Nevertheless, the number of microorganisms, in particular viable microorganisms that could be present in milk needs to be substantially reduced, preferably below a detection level.

It is an objective of the invention to provide a non-thermal pasteurisation method that is as efficient as thermal pasteurisation in terms of increasing food safety and reducing microbial counts, but which does not present the disadvantages of thermal pasteurisation. Such disadvantages are protein denaturation and the loss of bioactive molecules, the loss of bioactivity of molecules present in milk, the change of flavour, and sometimes change of colour.

More specifically, the present invention addresses the problem of the inactivation of bioactive components in milk during thermal pasteurization or preservation. Thermal pasteurization is normally done with liquid milk. Temperatures are around 72°C and for not less than 15 seconds holding time (Kessler 2006, International Dairy Federation, page 175), which is a too high process intensity for bioactive components, in particular bioactive proteins such as lactoferrin, IgA, IgG, TGF-β1 and 2.

The present invention also addresses the problem of obtaining a composition, in particular milk that has a reduced microbial load compared to an untreated composition or that has a microbial load that is not relevant for the safety and/or shelf life of the product.

The invention also addresses the problem of obtaining liquid or dried forms of compositions, such as compositions based on milk or comprising milk components, including milk powders, whey powders, casein powders, milk protein powders and the like, wherein bioactive molecules naturally present in milk remain active in the dried, in particular spray dried compositions. Processes of freeze-drying or spray drying with low temperatures can be conducted without destroying the activity of bioactive molecules, or without destroying it completely.

The present invention addresses the objectives above, and provides methods, uses and composition for obtaining the benefits set out above. The objectives and problems addressed by the present invention are part of the present invention.

## Summary of the Invention

The present invention is based on the finding that pulsed-electric field (PEF) treatments can be used in an efficient manner to eliminate even resistant microbial strains that can be found in milk. Interestingly, process parameters could be identified with which the activity of bioactive molecules that are naturally present in milk, in particular raw milk, could be to a substantial amount retained.

The method of the invention is particularly advantageous compared to thermal pasteurization as far as the integrity of proteins and activity of vitamins that are naturally occurring in milk is concerned. The proteins contained in the composition of the invention retain to a substantial extent their native constitution and can thus to a substantial extent exert their biological activity. Therefore, the invention provides also a PEF-treated composition comprising one or more specific proteins naturally occurring in milk, wherein a substantial amount of said protein is present in a native form.

According to an aspect, the invention relates to a method comprising the step of subjecting a composition to a PEF treatment.

According to an aspect, the invention relates to a method for treating a composition, the method comprising the step of subjecting said composition to a PEF treatment.

In an aspect, the present invention provides a method of obtaining a composition that is nutritionally and/or microbiologically safe and that comprises bioactive molecules present in raw milk in active form, and/or that provides the health benefits of bioactive molecules present in raw milk.

In an aspect, the present invention provides a method of obtaining a composition that comprises bioactive proteins present in raw milk in native form, and/or that provides the health benefits of native proteins present in raw milk.

According to an aspect, the invention relates to a method for increasing and/or warranting the safety of a composition, the method comprising the step of subjecting said composition to a PEF treatment.

According to an aspect, the invention relates to a method for increasing shelf life, in particular at chilled conditions, of a composition, the method comprising the step of subjecting said composition to a PEF treatment.

According to an aspect, the invention relates to a method for reducing microbial load in a composition, the method comprising the step of subjecting said composition to a PEF treatment.

According to an aspect, the invention relates to a method for substantially removing microbiological count in a composition, the method comprising the step of subjecting said composition to a PEF treatment.

According to an aspect, the invention provides a method for inactivating microorganisms in a composition in case or to the extent they are present in said composition, the method comprising the step of subjecting said composition to a PEF treatment. The method is thus preferably conducted as a precautious safety measure, even if it is not expected that there could be microorganisms, in particular pathogenic microorganisms, in the composition.

In an aspect, the present invention provides a method for reducing the microbial load of a liquid or viscous composition comprising one or more bioactive molecules, the method comprising the steps of subjecting said composition to a pulsed electric field (PEF) treatment, wherein in said PEF treatment, said product is exposed to a specific energy of 600 or less kJ per kg composition.

In an aspect, the present invention provides a method for reducing the microbial load of a liquid or viscous composition comprising one or more bioactive molecules, the method comprising the steps of subjecting said composition to a pulsed electric field (PEF) treatment, wherein in said PEF treatment said composition is exposed to a PEF with a field strength of 5 to 50 kV/cm.

In an aspect, the present invention provides a method for reducing the microbial load of a liquid or viscous composition comprising one or more bioactive molecules, the method comprising the steps of subjecting said composition to a pulsed electric field (PEF) treatment, wherein a temperature of said composition immediately before said PEF treatment is adjusted to 20 to 45°C.

In an aspect, the present invention provides a method for reducing the microbial load of a liquid or viscous composition comprising one or more bioactive molecules naturally occurring in milk, the method comprising the steps of subjecting said composition to a pulsed electric field (PEF) treatment, wherein in said PEF treatment, said composition is exposed to a specific energy of 600 or less kJ per kg composition, and wherein said composition is exposed to a PEF with a field strength of 10 to 20 kV/cm.

In another aspect, the invention provides a composition obtainable by, that can be obtained by and/or that is directly obtained by any one of the methods of the present invention.

In an aspect, the present invention provides a PEF treated composition comprising one or more bioactive molecules.

In an aspect the present invention provides a pulsed electric field (PEF) treated composition, which is microbiologically safe and which comprises one or more bioactive molecules naturally occurring in milk, wherein at least 30% of the respective molecule is in an active form. Said bioactive molecules are preferably selected from: proteins selected from antimicrobial factors, immunoglobulins, growth factors, cytokines and/or pro/anti-inflammatory factors, chemokines, enzymes, including digestive enzymes, hormones and transporters, glycomacropeptide, β-lactoglobulin, α-lactalbumin, milk fat globule membrane proteins, and combinations of two or more of the aforementioned; one or more bioactive lipids that are naturally present in milk such as butyrate, sphingolipids, phospholipids, milk-fat globule membranes, long chain polyunsaturated fatty acids; one or more vitamins that are naturally present in milk such as vitamin A, B1, B2, B3, B5, B6, B7, B9, B12, C, D and K; sialic acid, nucleic acids, oligosaccharides, amino acids and; taurine, wherein said composition has a microbial load that is sufficiently reduced so as to be safe for human consumption, wherein at least 30%, more preferably at least 35%, preferably at least 40% of said selected molecules are present in an active and/or native form.

In an aspect, the present invention provides composition, in particular a PEF treated composition, that is microbiologically and/or nutritionally safe and that comprises bioactive molecules present in raw milk in active form, and/or that provides the health benefits of bioactive molecules present in raw milk.

In an aspect, the present invention provides composition, in particular a PEF treated composition, that is microbiologically and/or nutritionally safe and that comprises one or more proteins that are naturally occurring in milk, wherein at least part of said protein is present in native form, and/or wherein the composition provides one or more health benefits of raw milk and/or of the native proteins.

In an aspect the present invention provides a pulsed electric field (PEF) treated composition, comprising at least one protein having an amino acid sequence corresponding to that of a protein naturally occurring in milk, wherein at least 30% of said protein is present in a native form.

In an aspect, the present invention provides a PEF-treated composition, which is microbiologically safe and which comprises one or more proteins naturally occurring in milk, wherein at least 30% of the respective protein is in a native form.

In an aspect the present invention provides a pulsed electric field (PEF) treated composition comprising one or more proteins having a biological activity, wherein said activity corresponds to at least 30% of the activity found in an untreated control, and/or wherein at least 30% of said protein is present in a native form.

The methods of the invention are advantageous in that they do not or only to a comparatively low extent inactive biological molecules that are present in the composition

Further aspects and preferred embodiments of the invention are provided in the appended claims and are set out in more detail in the description herein below.

## Brief Description of the Drawings

**Figure 1** schematically shows the structure or general design of a colinear PEF treatment chamber, which is used according to a preferred embodiment of the method of the invention.

**Figure 2** schematically shows a circuit diagram of a circuit that can be used for creating electric pulses for conducting a PEF treatment in accordance with the invention.

**Figure 3** schematically shows an exemplary PEF system for PEF-treating liquid or viscous compositions in accordance with the invention.

**Figure 4** shows a pair of treatment chambers as used in the PEF system shown in

Figure 2.

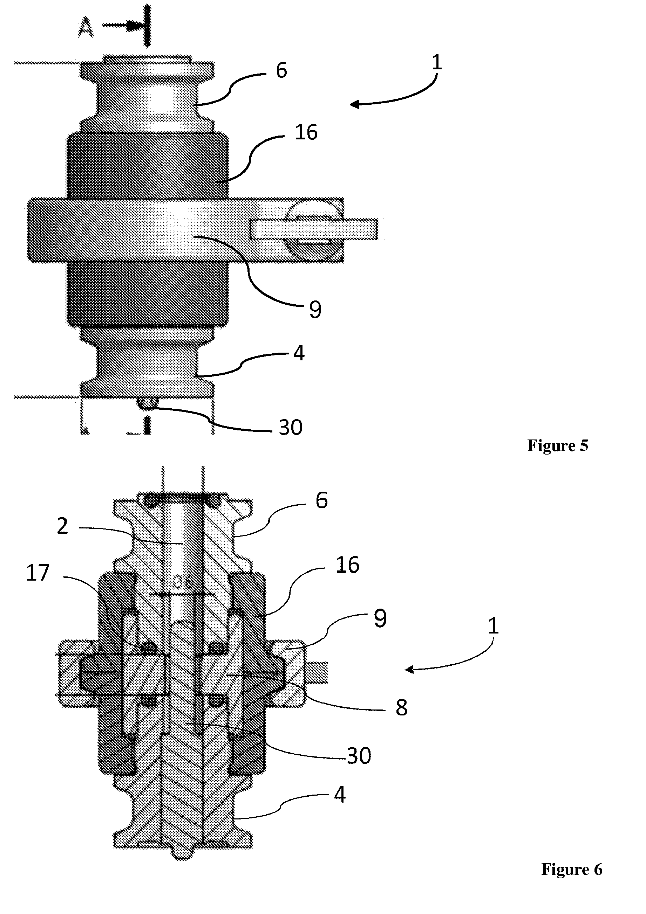

**Figure 5** is an elevation view to a colinear treatment chamber comprising an inset in accordance with a preferred embodiment of the method of the invention.

**Figure 6** is a longitudinal-sectional view of the treatment chamber shown in Figure 5.

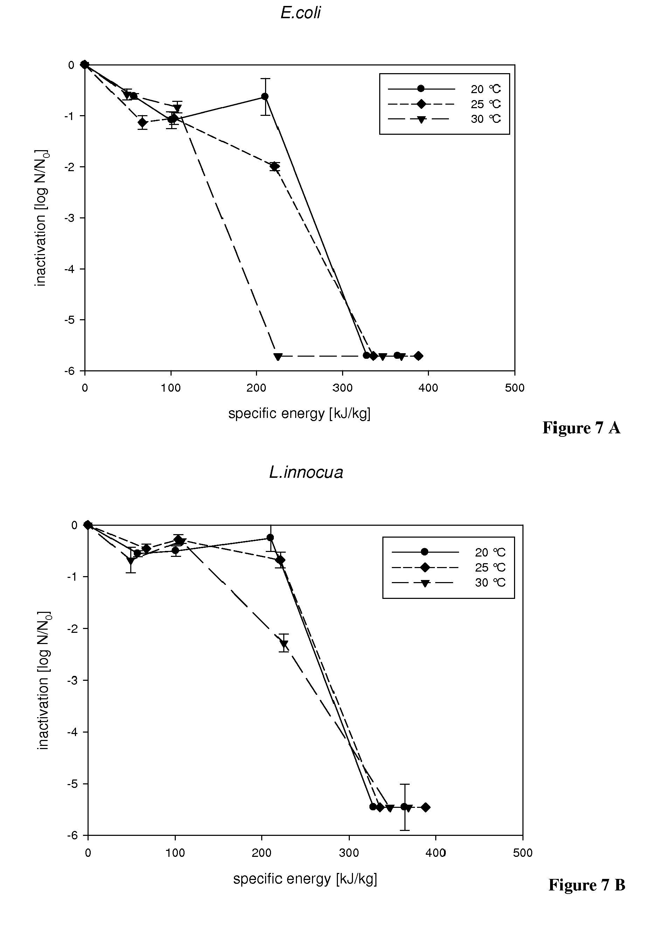

**Figures 7 A** and **B** show the effect of the start temperature of raw milk and specific energy applied in a PEF treatment on the inactivation of, respectively, added *E. coli* and *L. innocua.* At a start temperature of 30°C, less specific energy is needed to achieve inactivation.

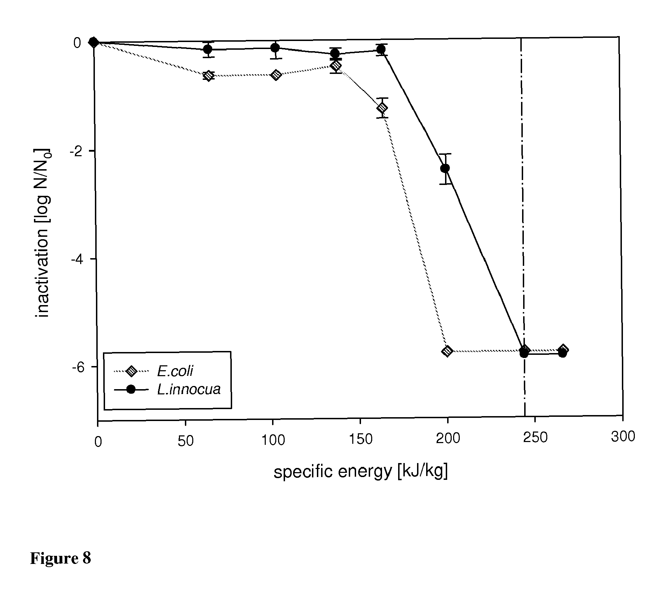

**Figure 8** shows the PEF-inactivation of microbial count of *E. coli* and *L. innocua* in inoculated raw milk in dependence of specific energy. The temperature of the raw milk was set to 30°C before the PEF treatment and a pair of colinear treatment chambers with an inset as shown in Figure 6 was used. Figure 8 shows that at 244 kJ/kg, the maximal microbial inactivation was reached.

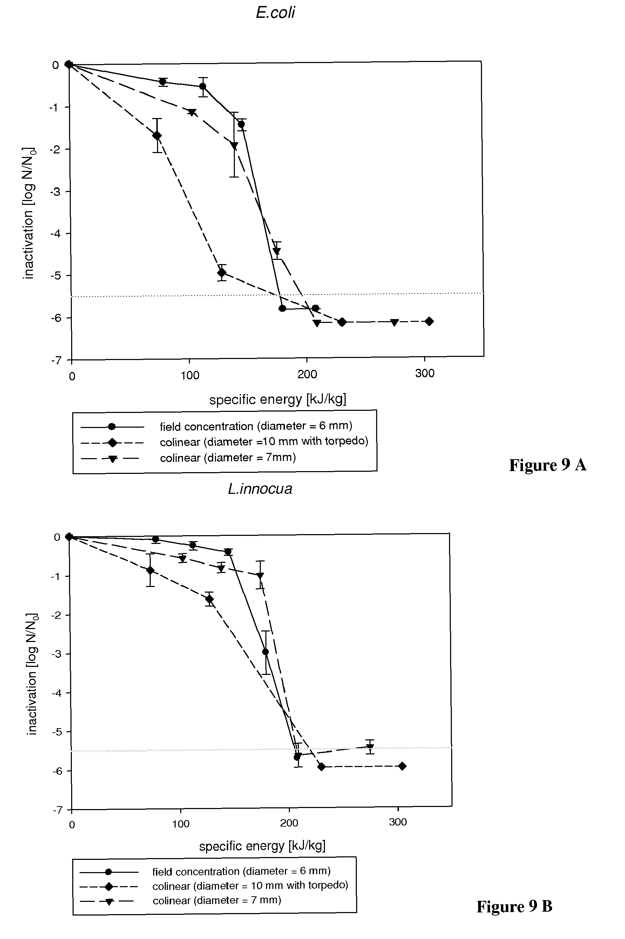

**Figures 9 A** and **B** show the effect of the treatment chamber design and specific energy applied in a PEF treatment on the inactivation of cfu counts of, respectively, *E. coli* and *L. innocua* added to raw milk having a start temperature of 30°C. The design using a colinear treatment chamber with a "torpedo" inset (Figure 6) requires less specific energy to achieve inactivation.

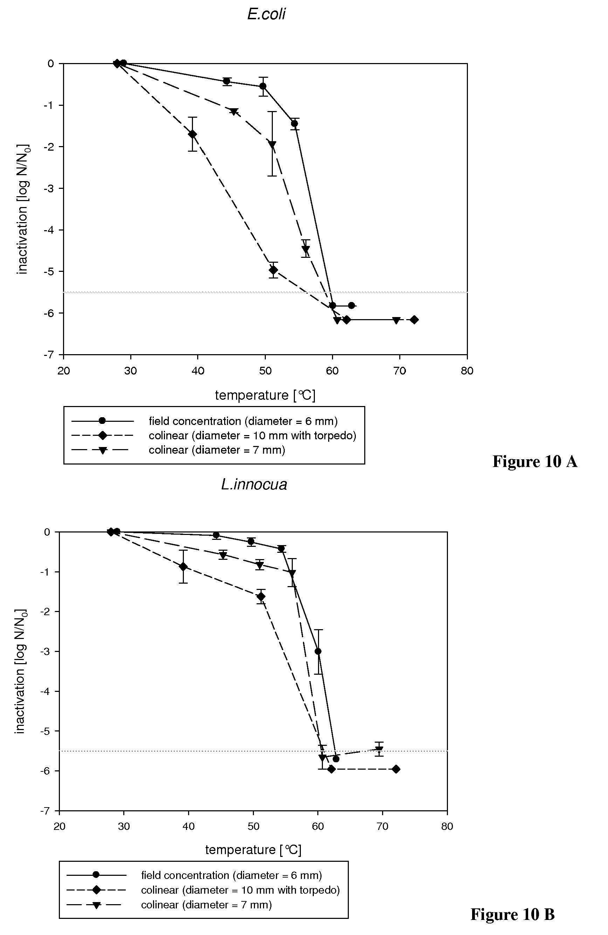

**Figures 10 A** and **B** show the effect of the treatment chamber design and the end temperature of the PEF-treated composition on the inactivation of cfu counts of, respectively, *E. coli* and *L. innocua* added to the composition (raw milk). The use of a colinear treatment chamber with an inset ("torpedo") is most advantageous, because the temperature rise due to the PEF treatment remains lower with respect to a given microbial inactivation.

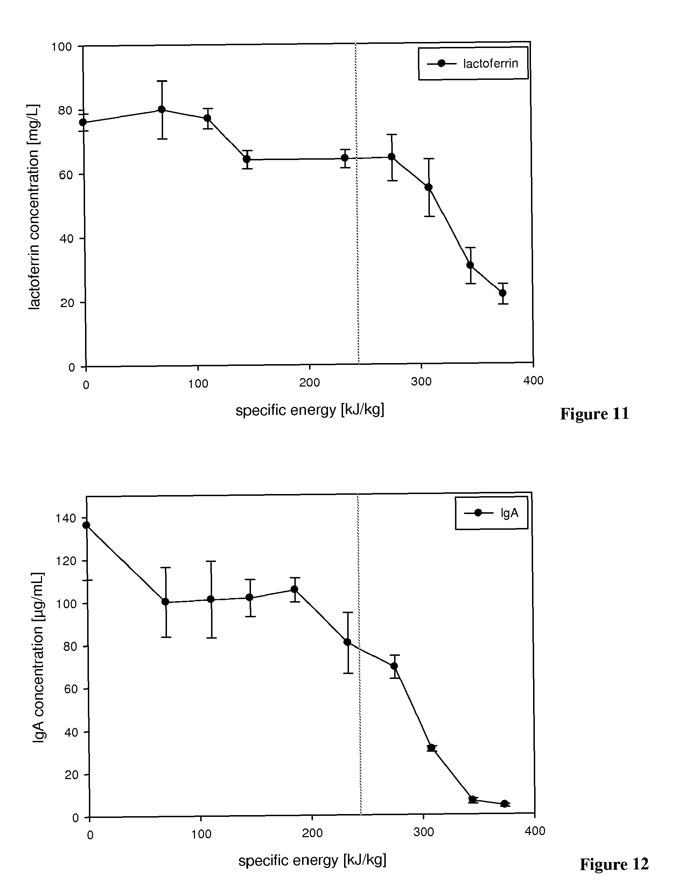

**Figure 11** shows presence of lactoferrin in milk following PEF treatment of raw milk at increasing specific energies. Activity/integrity of the bioactive molecule (lactoferrin) is measured by ELISA using a pair of antibodies that are specific to native lactoferrin. At a specific energy of 244 kJ/kg, the major part of lactoferrin is still native.

**Figure 12** is as Figure 11, with the difference that the bioactive molecule is IgA.

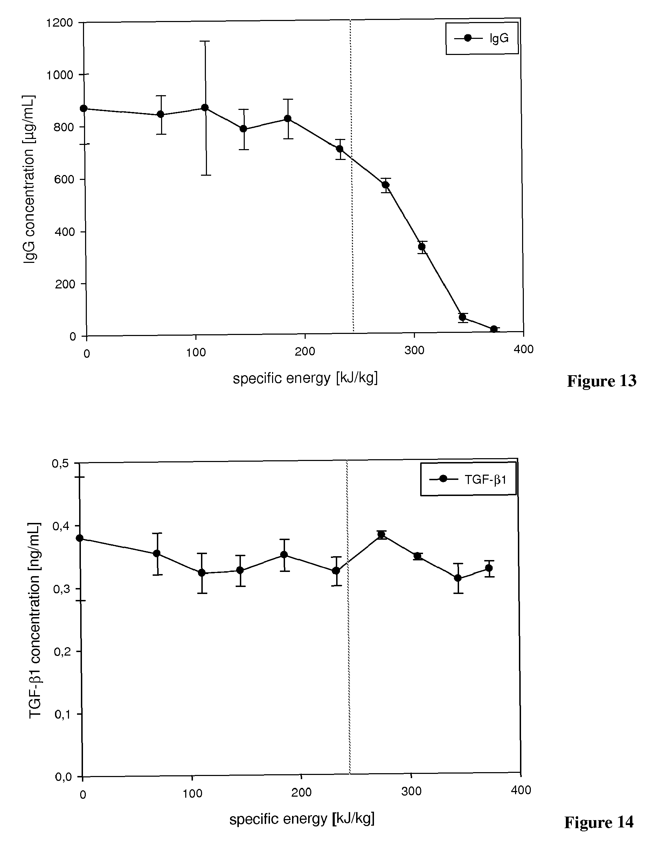

**Figure 13** is as Figure 11, with the difference that the bioactive molecule is IgG.

**Figure 14** is as Figure 11, with the difference that the bioactive molecule is TGF-$\beta$1.

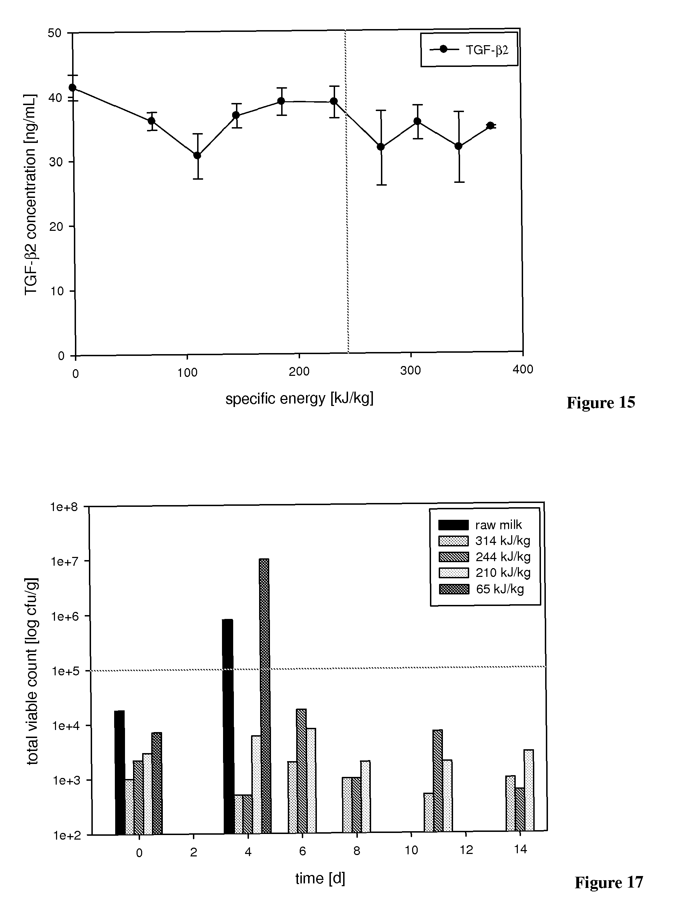

**Figure 15** is as Figure 11, with the difference that the bioactive molecule is TGF-$\beta$2.

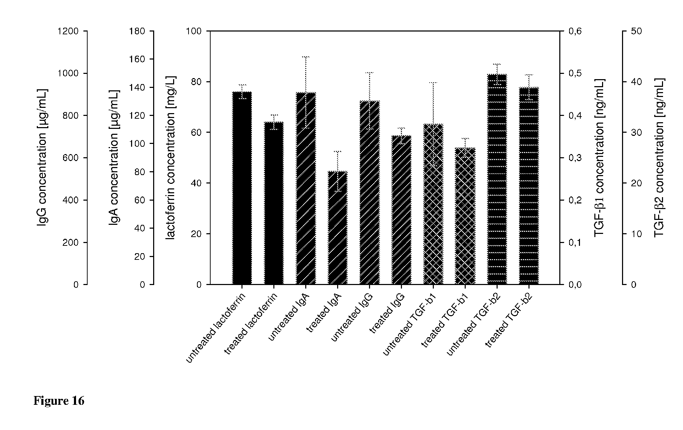

**Figure 16** is a bar plot summarizing the results shown in Figures 10 to 14 as obtained in a PEF treatment with a specific energy of 244 kJ/kg. The amounts of specific bioactive molecules as indicated are compared to the amounts in raw milk (untreated control).

**Figure 17** shows the counts in cfu of milk treated with PEF at different specific energies (0 (raw milk), 65, 210, 244, 314 kJ/kg milk) at 0, 2, 4, 6, 8, 11, and 14 days following the PEF treatment and when stored at 4°C. When treated in accordance with the invention, milk is shelf stable for 14 days, with cfu counts remaining clearly below $10^5$cfu.

**Detailed Description of the Invention**

The present invention relates to a method comprising the step of subjecting a composition to a treatment with one or more pulsed electric fields (PEF), in particular in a treatment chamber.

For the purpose of the present specification, the term "comprising" means "includes amongst others". It is not intended to mean "consists only of".

The composition is preferably a consumable and edible composition intended for human consumption or for consumption by an animal. The composition is intended for oral administration and/or consumption. In this regard, the composition comprises and preferably consists of edible components and/or matter. The composition is thus preferably free of any toxic and/or unwholesome matter, which is not intended or suitable for oral administration to a human or animal. The composition of the present invention is nutritionally and/or microbiologically safe, in particular following the PEF treatment in accordance with the invention.

The composition that is subjected to a PEF treatment is preferably a liquid or viscous composition. In particular, the composition preferably has properties of liquids, such as viscosity. The composition may thus be a suspension, a slurry, a solution, and the like. The composition may comprise solids in the composition, for example suspended and/or dissolved in the composition.

Preferably, before said method of the invention, the composition has a viscosity that, when determined at room temperature (25°C), is lower than (<) 10 Pascal seconds (Pa s), preferably < 5 Pa s, even more preferably < 3 Pa s, < 1 Pa s, < 0.5 Pa s, <0.3 Pa s, even more preferably <0.1 Pa s, < 0.05 Pa s, and most preferably < 0.01 Pa s. It is noted that the invention is particularly useful for viscosities of 0.0001 to 0.5 Pa s, in particular 0.001 to 0.1 Pa s, which encompasses the viscosities of milk (0.0017 Pa s) and cream. Viscosity, in particular of low viscosity liquids having a viscosity in the range of 1 to 10'000 mPa s may be determined using the Rheotest ® LK capillary viscosimeter of the company Rheotest Messgeräte Medingen GmbH, Ottendorf-Okrilla, Germany), using the basic version without temperature control jacket (for beer and wort, milk, drink yoghurt, etc.). Different capillaries are used covering different viscosity ranges. The sampel volume is approximately 25 ml.

According to an embodiment, the viscosity of the composition lies in the range of 0.0005 to 3.5 Pa s, preferably 0.001 to 3 Pa s, which encompasses milk-based products such as milk and yoghurt (0.5-3 Pa s). According to an embodiment, the viscosity of the composition is in the range of 0.001 to 1 Pa s.

According to an embodiment, the composition comprises nutrients. Therefore, the composition is preferably a nutritional composition and/or a food composition.

According to an embodiment, the composition comprises, consists essentially of or consists of one or more milk ingredients. For example, the composition may comprise one or more selected from milk protein, milk fat, milk fat globule membrane, lactose, besides vitamins and other nutrients comprised in milk. For example, the composition may comprise casein and/or whey protein. Whey protein may be sweet or acid whey. The milk ingredient may be present in the form of a powdered reconstituted ingredient, for example milk powder reconstituted in water.

According to a preferred embodiment, the composition of the invention comprises bioactive molecules that are naturally present in raw milk.

According to an embodiment, the composition comprises, consists essentially of or consists of milk or a component of milk.

According to an embodiment, the composition of the invention comprises, consists essentially of or consists of a dairy and/or a milk-based product.

The composition before and/or after the method of the invention may comprise, consist essentially of or consist of one or more selected from the group of whole milk, semi-skimmed milk, skimmed milk, colostrum, reduced fat milk, low fat milk, fat-free milk, whey (milk plasma), such as sweet whey or acid whey, a milk-based drink, a yoghurt, frozen yoghurt, a yoghurt drink, ice cream, cream, butter, fresh cheese, curd, and cheese, powders or otherwise dried forms of any one of the aforementioned, and compositions comprising combinations of two or more of the aforementioned.

According to an embodiment, the composition before the method of the invention may comprise, consist essentially of or consist of one or more selected from the group of raw milk, whole milk, semi-skimmed milk, skimmed milk, colostrum, reduced fat milk, low fat milk, fat-free milk, whey (milk plasma), such as sweet whey or acid whey, and combinations of the aforementioned.

The composition may comprise, consist essentially of or consist of one or more selected from the group of whole milk, reduced fat milk, low-fat milk, and non-fat milk, and/or powders of any one of the aforementioned. Whole milk has generally a milk fat content of about 3 to 3.8wt.%, reduced fat milk of 2 to 3wt.%, low-fat milk of 0.5 to 2wt.%, fat free milk of 0.5wt.% or less.

Semi-skimmed milk encompasses milk having all milk fat removed and a required or desired quantity of milk fat returned thereafter. Generally, fat-free milk is skimmed milk, whereas reduced fat milk, and low fat milk are generally semi-skimmed milks. However, it is not excluded, for the purpose of this invention, that reduced fat, low fat and fat-free milk are obtained other than by skimming whole milk.

According to an embodiment, the composition comprises, consists essentially of or consists of raw milk or a component of raw milk. For example, the composition comprises whole raw milk. "Raw milk", for the purpose of the present specification, is milk that is produced by secretion of the mammary glands of humans or animals, in particular non-human mammals as disclosed elsewhere in this specification, which milk has not been heated beyond 40°C or undergone any treatment that has an equivalent effect. Preferably, raw milk is milk that was not subjected to any homogenisation treatment. Preferably, raw milk is milk that was not subjected to any thermal pasteurization and/or ultrahigh temperature treatment (UHT).

Raw and/or whole milk have a dry matter content of about 11 to 13.5w.%, for example about 12.8 wt.%. From the dry matter content, the amount of active molecules per dry matter may be determined on the basis of amounts given elsewhere in this specification.

For the purpose of the present specification it is assumed that raw milk has a density of 1.030 kg/L. The composition before and after the PEF treatment in accordance with the invention are assumed to have the same specific weight of 1.030 kg/L. With this value, the amount of bioactive molecules per kg of the composition can be determined from values indicated in weight per volume (e.g. mg/L, $\mu$g/L and ng/L and the like). Furthermore, the amount of the bioactive molecules in a dried composition, for example a spray-dried, powdered composition may be determined (see amount of dry matter present in milk above). For the purpose of the present specification, a spray-dried composition based on or comprising a milk component (e.g. spray-dried whole milk) is considered to have a residual moisture content of about 3 wt.%. The water activity (Aw) of such a composition is considered to be 0.2-0.3.

Preferably, the "raw milk" was not subjected beforehand to any treatment aiming at reducing bacterial load or increasing shelf life of the composition, including, for example one or more selected from high pressure treatment or microfiltration.

The expressions "raw milk", sometimes also referred to as "fresh milk", are considered and used as equivalents for the purpose of the present specification.

"Milk", for the purpose of the present specification, may be milk obtained from cattle, for example, such as milk of cows, buffalos, sheep, and goats, but also from horses and camels, for example. The invention also envisages that the composition comprises bioactive molecules that are naturally present in human milk. It is also possible to treat human milk in accordance with the present invention.

The present invention relates to a method of treatment of a composition comprising bioactive molecules, such as those occurring naturally in milk as specified elsewhere in this specification.

The method of the invention is suitable to yield the composition of the invention, which may also be referred to as a PEF treated composition or a second composition. As detailed elsewhere in this specification the composition of the invention may still be liquid or viscous, or, alternatively, may be obtained following further processing, such as, for example drying, in particular spray drying.

The composition before the PEF treatment in accordance with the invention may be referred to as a first composition or an "untreated control" (composition). For example, the untreated control is raw milk. According to an embodiment, the "first composition" has not been subjected to any heat treatment or other treatment aiming at reducing bacterial load. The amount of any specific bioactive molecule in the "untreated control" or first composition is considered to be the total (100 wt% or mol%) of said specific molecule in the composition. In case of bioactive proteins, the amount of native protein in said first composition preferably is considered to be the total amount (100%) of said specific protein.

According to an embodiment, the composition before said PEF treatment is a first composition and/or an untreated control, and wherein said composition after said PEF treatment is a second composition and/or a PEF treated composition, and wherein said PEF treated composition comprises at least 30%, preferably at least 40% of said bioactive molecule in active and/or native form if compared to said untreated control. Preferred bioactive molecules and preferred amounts of said molecules in an active and/or native form are detailed elsewhere in this specification.

According to an embodiment, the composition before said PEF treatment is a first composition and/or an untreated control, and wherein said composition after said PEF treatment is a second composition and/or a PEF treated composition, and wherein said PEF treated composition comprises at least 30%, preferably at least 40% of a specific protein in native form. As a logic consequence, the composition preferably comprises, with respect to the total content of said specific protein and/or less than 70%, preferably less than 60%, respectively, of said protein in denatured and/or degraded form. According to an embodiment, the method of the invention aims at reducing the number of microorganisms such as bacteria, mycobacteria, and fungi, such as yeast, that are possibly present in raw milk. The expression "reducing the number of microorganisms" generally refers to a reduction of colony forming units (cfu) in case of microorganisms that can be cultivated on suitable media, e.g. in petri-dishes. In particular, the method is suitable to reduce the number of reproducing and/or vegetative microorganisms, preferably those that may be present in milk. The invention is thus suitable to reduce the number of microorganisms that are in a phase of vegetative growth, for example by mitosis and/or multiplication in the life cycle of the micro-organism.

A reduction of the number of microorganisms present in the composition generally increases the stability and/or shelf life of the composition. Therefore, the present invention also relates to a method for increasing the stability of the composition and/or the shelf-life of the composition.

The reduction of the number of microorganisms includes a reduction of pathogenic microorganisms and therefore, the invention also relates to a method for increasing the safety and/or healthiness of the composition.

The method of the present invention has the goal of reducing bacterial load and load of other microorganisms for the purpose of assuring the microbial safety of the composition. Furthermore, the method of the invention aims at maintaining the activity of healthy bioactive molecules that are naturally contained in milk for the purpose of assuring or increasing the nutritional benefit associated with the bioactive molecules. Therefore, the present invention further relates to a method of PEF-pasteurization that is leaves such bioactive molecules intact and/or active to at least some extent, preferably to a larger extent that other known methods of pasteurization.

Generally, the term "pasteurization" may refer to different processes that inactivate vegetative microorganisms, in particular pathogens, in liquid or viscous food. The present invention may thus be understood as a process of pasteurization. On the other hand, the present invention does not relate to "thermal pasteurization", which is a state of the art industrial method for reducing the number of microorganisms in liquid food specifically by heat treatment alone.

The method of the invention relates to a pulsed electric field (PEF) treatment for inactivating vegetative microorganisms, in particular pathogens, and may thus also be referred to as a PEF-pasteurization. Accordingly, the methods of the invention comprise the step of subjecting a liquid or viscous composition to a PEF treatment.

In the PEF treatment, the composition is exposed in a treatment chamber to one or more electric fields that are maintained for certain duration of time (the pulse duration). The electric fields are generally repeated at a specific frequency, as detailed elsewhere in this specification. PEF treatments are reported to cause microbial inactivation. Without wishing to be bound by theory, it is believed that the exposure to an electric field leads to changes in the membrane structure of a micro organism, which further results in the formation of pores and/or increases the permeability of the membrane. High intensity pulses of electrical fields can cause irreversible breakdown of micro-organisms.

The composition is generally exposed to a PEF in a treatment chamber. The PEF is generated by way of electrodes, which generally are part of the treatment chamber or which are adjacent to the treatment chamber.

PEF treatments may be conducted in different types of treatment chambers, such as, for example, static or continuous treatment chambers. According to an embodiment, the methods of the present invention relates to continuous methods of treatment. In particular, the invention relates to a continuous method of reducing micro organisms in a food composition. A "continuous method" for the purpose of the present specification, is different from a batch-wise process. In a "continuous method", the composition is continuously exposed to a PEF treatment. In other words, the composition is continuously subjected to said PEF treatment. In particular, the composition is continuously guided to and removed from a PEF treatment chamber. In the continuous methods of the invention, the composition to be treated is continuously moving in a particular direction, for example is continuously pumped through one or more treatment chambers.

The entire process of the invention may be continuous, including, possibly, adjusting the temperature of the composition to specific temperatures by heating and/or cooling, and/or the optional step of spray-drying or freeze-drying. Alternatively, the PEF-treatment is continuous, while other steps, such as heating, cooling and spray-drying, if present, may be independently conducted in a continuous or batch-wise manner.

There are several types of treatment chambers designs that are suitable for continuous PEF treatment, which chambers are generally differentiated by the arrangement or position of the electrodes and, as a consequence, the field strength distribution in the treatment chamber. There are linear, coaxial and colinear continuous treatment chambers.

According to an embodiment, said PEF treatment of the invention is applied in one or more colinear treatment chambers.

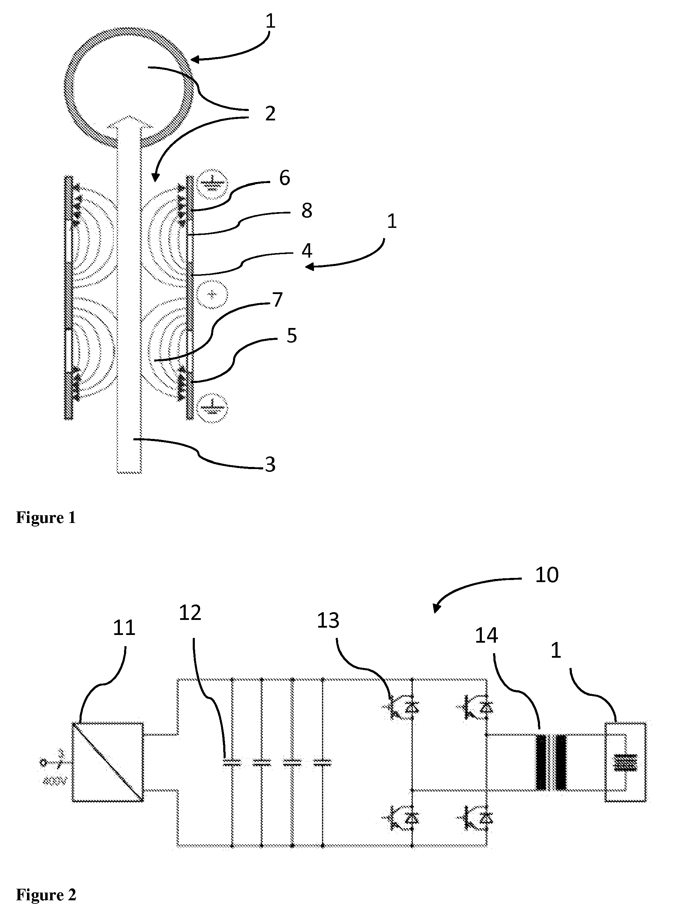

The general structure of an exemplary colinear treatment chambers is schematically shown in **Figure 1.** In this type of chamber, the electrodes have a substantially hollow cylindrical inner lumen and are separated by an insulator that has also a hollow cylindrical lumen, so that a tube is formed through which the composition flows or passes while being exposed to the PEF treatment. In Figure 1, the treatment chamber 1 comprises an inner lumen 2, through which the product passes, as illustrated by the arrow 3, which represents the product flow though the treatment chamber 1. The treatment chamber comprises a central electrode 4, which is positive in the case shown, and earthing electrodes 5 and 6, which are located upstream and downstream, respectively, of the positive electrode 4. All electrodes are separated by insulating material 8. The electrodes 4, 5, 6 and the insulator 8 in contact with the product preferably have hollow cylindrical inner walls and form a hollow cylindrical inner lumen of the treatment chamber 1. The lines 7 represent the electric field.

In general, a treatment chamber comprises, substantially consists of or consists of two or more electrodes and an isolator separating the two or more electrodes. A colinear treatment chamber is generally hollow cylindrical, hollow conical and/or tubular, with a pair of annular, hollow conical and/or tubular electrodes being located up-stream and downstream a hollow cylindrical, hollow conical and/or tubular central lumen, the latter being generally made of the insulator.

The electrodes are preferably metallic, preferably made from stainless steel or titanium or another material that is inert and/or that allows contact to food products and is suitable to reduce or avoid any electrochemical reaction at the surface of the electrode, such as electrochemical deposition or dissolution of metal. The electrode material is generally selected so that substantially no electrolysis or redox-reaction in general occurs at the electrodes.

It is noted that the composition that is PEF treated is in contact with the electrodes.

The two electrodes are generally separated by an insulator material. Generally, the lumen of the treatment chamber between the electrodes may be made from said insulator material, which is preferably also in contact with the composition during the PEF treatment. In other words, between the electrodes there is generally a gap comprising the insulator, through which the composition is moved while being exposed to electric fields of the PEF treatment. The presence of the insulator is necessary to maintain a correctly oriented, effective electric field in the lumen of the treatment chamber, starting from one electrode and extending to the oppositely charged (or non-charged or less-charged) electrode.

Thereby, the electric field extends between the two electrodes. The insulator may be made from isolating and preferably inert material, such as ceramics or polymers such as polyethylene, PTFE or other insulating materials.

The treatment chambers comprising the electrodes and the insulator may comprise a casing structure, at least part of which is preferably also made from insulating material, which assembles or stabilizes at least partially the further parts of the treatment chamber, so as to structurally connect and hold together the different parts (electrodes, insulator of treatment chamber).

In the result, the colinear treatment chamber, including the electrodes, comprises or forms a tubular lumen, which is particularly suitable for continuous treatment by PEFs. The treatment chamber thus comprises a product inlet, which is preferably circular, and a product outlet, which is preferably circular.

Preferably, the PEF treatment in accordance with the present invention involves at least one, more preferably at least two treatment chambers, preferably even more, for example three, four, five, six or more treatment chambers. If there are more than one treatment chambers, the latter are preferably connected in series, so that the compositions flows or passes through one after the other of said treatment chambers. Most preferably, four treatment chambers are used.

Generally, one treatment chamber is characterized by at least two electrodes, a charged electrode and a counter electrode (the counter electrode may be oppositely charged, may be an earthing, or may carry the same charge as the charged electrode, but to a lesser degree, for example a half(½)-charged electrode).

Multiple electrodes are possible, for example electrode pairs, triple electrode systems or quadruple electrode systems, in particular with colinear treatment chambers. In the case of triple electrode systems, the electrodes may be arranged as ground - plus - ground (see Figure 1); ground - minus - ground; plus - ground - plus; minus - ground - minus; plus - ½ (half) plus - plus; minus - ½ (half) minus - minus; ½ minus - minus - ½ minus; ½ plus - plus - ½ plus, for example. In case of a four-electrode system, two identical electrodes (e.g. two plus electrodes) may or may not be in mechanical connection. In the former case, there generally also is an electrical coupling, but they would still be two separate mechanical parts and be regarded as two electrodes. In analogy of the above said, one could use ground - plus - plus - ground; ground - minus - minus - ground; plus - ground - ground - plus; and so forth as above with the triple electrode systems.

In both, the triple and quadruple electrode systems, such as described above, for example, there would be two treatment chambers between an electrode and the respective counter electrode.

The expressions "up-stream" and "down-stream" refer to the flow of the composition through said treatment chambers and/or during the PEF treatment, wherein up-stream refers to a region closer the origin of the flow of the composition (or a direction against the flow of the composition), whereas downstream refers to a region further away in the direction of the flow of the composition. The expressions "up-stream" and "down-stream", for the purpose of the present specification, are used as is conventional.

If there are two colinear treatment chambers it is generally advantageous to combine two charged electrodes as central electrodes (for example positively or negatively charged, preferably at about the same voltage), wherein two counter electrodes are located, one up-stream and one downstream, of the central electrodes, separated by the insulator. The inverse is also possible (central earthing or semi-charged counter electrode).

According to an embodiment, two positively charged electrodes (at about the same voltage level) are provided at the up-stream and downstream ends of two combined treatment chambers, with one or two counter electrodes being provided centrally, between the two treatment chambers.

In case of two treatment chambers, there are thus preferably three or four electrodes, as the one or two central electrode(s) functions as counter electrode for two separate, up-stream and downstream electrodes.

The number of treatment chambers and/or electrodes is selected on the desired PEF treatment and/or the desired residence time in the treatment chamber.

According to an embodiment, the PEF treatment is applied by way of three or four electrodes in two treatment chambers, or, alternatively, by way of six or eight electrodes in four treatment chambers.

According to an embodiment of the methods of the invention, the PEF treatment is applied or conducted in one or more colinear treatment chambers, and/or wherein said treatment chamber preferably comprises an inside or inner element. The inside element is preferably inert and not conducting. Preferably, the inside or inner element does not or not substantially affect or interfere with the electric field created by the PEF treatment. Preferably, the inside element is made of an insulating material such as PE, PTFE or ceramic material. The inside element is referred to as inside element because it is placed inside, that is within the lumen of the treatment chamber. The inside element is thus in contact with the composition that passes through the treatment chamber and affects the flow of the composition, in particular the flow direction and flow type of the composition.

The inside or inner element may be provided in the form of a rigidly and non-detachable element, forming one piece with one or more other structural elements of the treatment chamber, for example with the insulator that separates the electrodes and/or that provides the inner wall of the treatment chamber between the electrodes.

Alternatively, and preferably, the inside element is a separate piece provided in the form of an inset, which may be placed in the treatment chamber and removed therefrom, for example when disassembling the treatment chamber for the purpose of cleaning. If the inside element is a separate piece, it may be provided in the form of an inset, which is a structural element that may be inserted into the treatment chamber and which occupies a specific position within the treatment chamber during use (PEF treatment).

Surprisingly, it has been found that the use of an inside element in the treatment chamber is suitable to impact the flow pattern and/or reduce or prevent inhomogeneity of the electric field to which the composition is exposed in the treatment chamber. It is noted that an inhomogenous electric field may cause temperature peaks, which can damage temperature sensitive components of the composition. For example, local temperature peaks may lead to a denaturation of certain proteins resulting in a change of the physical and chemical properties of the composition. Therefore, the inside element preferably reduces temperature peaks in the composition, preferably within the treatment chamber.

It is also supposed that the inside element is suitable to reduce laminar flow and increase turbidity of the liquid or composition in the treatment chamber. In this way, the probability of homogenous, regular and/or treatment and/or exposure to the electric fields during the PEF treatment is improved. It is noted that laminar flow characteristics within the treatment chamber are supposed to be unfavorable, because of the differences in flow speed and the like that are accompanied with laminar flow.

According to a particular embodiment, said PEF treatment is applied in one or more treatment chambers having a substantially hollow cylindrical or hollow conical lumen, wherein said treatment chamber comprises an inside element, wherein said inside element comprises a longitudinal, and cylindrical or conical section, and wherein said inset occupies a space of said hollow lumen of said treatment chamber.

According to an embodiment, said PEF treatment is applied in one or more treatment chambers having a lumen, wherein said composition is continuously guided through said lumen of said treatment chamber, and/or wherein an inside element is provided in said lumen, such that, in said treatment chamber, said composition is guided around said inside element.

According to an embodiment, said PEF treatment is applied in one or more treatment chambers having an inlet and an outlet, wherein said composition is continuously inserted into the inlet of said chamber and continuously removed from said treatment chamber through said outlet, and wherein said one or more treatment chambers comprise an inside element, wherein said inside element is placed in said chamber so that the product is guided in proximity to inner walls in part of said chamber and/or wherein said inside elements prevents said composition to occupy an axial position within a section or part of said chamber.

The inner element thus preferably forces the composition to flow along an annular or tubular opening or empty space, which is limited by the inner walls of the hollow cylindrical electrodes and insulators, and the outer walls of the cylindrical inner element. While this situation could be reminiscent of the situation of coaxial treatment chambers, where one electrode is provided inside the treatment chamber, the inside element of this invention differs from the latter in that it is not an electrode, but only influences the product flow within the treatment chamber.

According to an embodiment, said PEF treatment is applied in one or more treatment chambers comprising an inside element, said inside element is suitable to increase the number of turbulences present in said composition and/or to reduce the laminar flow of said composition within said treatment chamber.

The inside element preferably has a longitudinal structure, and/or preferably comprises a conical or cylindrical portion.

If the inside element is a separate piece (an inset) it preferably further comprises an anchoring structure, which allows the stabilization of the element in the treatment chamber. The anchoring structure may actually take place outside the treatment chamber, but results in a fixed, rigid positioning of the inset within the treatment chamber.

The inset preferably occupies at least a part of the axial position in the hollow cylindrical or hollow conical lumen of the treatment chamber. Preferably, the inset is longitudinal and has an axis, wherein the inset occupies the axis and/or part of the axial space within the treatment chamber. Preferably, the longitudinal inset is positioned so as to be coaxial with the hollow cylindrical or hollow conical lumen of the treatment chamber.

Preferably, the inset comprises a first and a second end, and, between said first and second ends, an intermediate part. Preferably, at least one of said first and second ends comprises an anchoring structure, which assists in the attaching of the inset in the treatment chamber. If only one of the ends comprises said anchoring structure, the other end may be simply a flat surface or preferably a rounded half or a pointed end. For example, one end may have substantially the form or shape of a half ball.

The substantially longitudinal part between said ends of the inside element is preferably cylindrical and/or conical, and/or may comprise a combination different conical sections or of conical and cylindrical sections. Overall, the central, intermediate part has a diameter that is smaller than the diameter of the inner lumen of the treatment chamber, so that the inside element can be placed in the lumen of said treatment chamber.

The anchoring parts preferably comprise parts that extend radially, in particular from one end (the up-stream end or rear end) of the intermediate part and that are in contact at some position with the inner wall surface of the treatment chamber or of the conduct in which the composition is guided to or removed from the treatment chamber. For example, the inside element may comprise a projection or a lug that abuts against an abutment surface provided towards the up- or downstream extremity of the treatment chamber.

The inside element may have the general aspect of a torpedo. A preferred treatment chamber design, including the inside element in the form of an inset is disclosed in the international patent application with number PCT/EP2011/051149, which was filed on January 27, 2011. The use of such an inset in a colinear treatment chamber resulted in the best results in terms of reduction of microbial load and maintenance of bioactive components of the composition.

Preferably, the inner diameter of an inner, hollow cylindrical lumen of the treatment chamber is between 5 and 35 mm, preferably 6 to 30 mm, more preferably 7 to 25 mm, most preferably 9 to 20 mm, 9 to 17 mm, 9 to 15 mm, or 9 to 13 mm, for example 9.5 to 11 mm.

In case the inner lumen of the treatment chamber is not hollow cylindrical, for example if the treatment chamber has a non-circular cross-section, for example an elliptical cross-section, the values of the diameter indicated above apply to the largest diameter observed at any specific position in the treatment chamber. If the diameters in the treatment chamber are arranged to change in a longitudinal or axial direction (as is the case, for example, in hollow conical treatment chamber lumens), the values and ranges indicated above refer to values that may be observed at any one position of the treatment chamber. For the purpose of the present specification it not mandatory, although being preferred, that these dimensions apply to the entire lumen of the treatment chamber. Preferably, the inner lumen of the treatment chamber is substantially or entirely hollow cylindrical, so that the cross section of the treatment chamber shows a circular inner diameter of the treatment chamber over substantially the entire length of the treatment chamber.

For the purpose of the present specification, the treatment chamber encompasses the entire space where an electric field between a pair of electrodes is found.

The values and ranges indicated above for the diameter of the inner lumen of the treatment chambers are not in any way affected by the presence of an inside element/structure or of a rigid structural element that is provided within the treatment chamber as defined elsewhere in this specification, although the inside and/or rigid element has the effect that not the entire lumen of the treatment chamber can be occupied by the product flow or the flow of the composition within the treatment chamber. The fact that the inside element occupies some of the volume within the treatment chamber is not considered by the above values of diameter.

In the context of the present specification, values, for example process parameters of the method of the invention, may be indicated by way of ranges. The indication of a range in the present specification means that the specific parameter (e.g. inner chamber diameter, specific energy, field strength, pulse length, etc.) may assume any one of the indicated end-point values of the respective range, or may assume any value that lies within the range. Generally, but not necessarily in all cases, the parameter assumes a substantially constant value of the range. The skilled person will understand in what cases the value is constant and in what cases there may be fluctuations. For example, in case of the diameter of the inner lumen of the treatment chamber, since this is about a structurally generally invariable entity, such a diameter remains constant at a specific position in the treatment chamber. If the value of a parameter fluctuates, it is preferred that such fluctuations remain to a large extent substantially inside the indicated range.

In the method of the invention, pulses of electric fields are produced at the electrodes, with the electric fields extending within said treatment chambers.

The skilled person knows how to create pulsed electric fields in a treatment chamber. Generally, the system for producing electric pulses of high energy are preferred, which comprise a power supply, one or more capacitors, one or more transistors (e.g. IGBT-insulated gate bipolar transistors) and at least one transformer (e.g. a DIL High Voltage Transformer Elcrack®). According to an embodiment, the system for PEF treatment of the invention comprises one or more coolers and/or one or more heaters, that are suitable to adjust the temperature of the composition before or after PEF treatments. Basically, pulses are generated by storing electrical energy in capacitors by a power supply so as to be capable of emitting high power rates. The transistors or other semiconductor switches are used to periodically discharge the energy and transfer it to the treatment chamber. The maximum output current and voltage as well as polarity are typically defined by the pulse modulator setup.

Generally, the PEF system needs to be cooled, which may be made, for example by oil, which is pumped through a circulation of the system by an oil pump.

In the method of the present invention, the liquid and/or viscous composition is pumped through the one or more treatment chambers. Preferably, the composition is pumped against a counter pressure. The counter pressure in preferred in order to reduce the risk of creation of air bubbles and/or to maintain a homogenous flow of the composition. The counter pressure preferably lies between 1.1 to 4 bars, more preferably 1.3 to 3 bars, even more preferably 1.5 to 2.5, for example 1.7 to 2.3 bars, most preferably 1.8 to 2.2 bars. According to an embodiment, the counter pressure is 1.5 to 3 bars. Preferably, the counter pressure has a substantially constant value.

**Figure 2** shows a PEF system with a pulse transformer that may be used for the method of the present invention.

Process factors or parameters that may play a role for the purpose of the method of the present invention are one or more selected from the strength of the electric field that is applied, the pulse duration, the specific energy, the number of pulses, the pulse type or shape, the pulse polarity, the temperature of the composition before, during and/or after the PEF treatment, and the pulse frequency.

The present invention is based on the surprising finding that, by adjusting one or more of these process parameters to specific values, the objectives of the invention are met. In particular, the microbial load can be substantially reduced while at the same time keeping intact a significant amount or percentage of bioactive molecules, in particular proteins, present in the composition.

A relevant process parameter of the method of the invention is the specific energy ($W_s$ or $W_{SPECIFIC}$), which is shown in equation 1 below.

$$W_{specific} = \frac{W_{pulse} \cdot f}{\dot{m}}$$

**equation 1**

In equation 1, $W_{PULSE}$ is the specific energy in kJ (kilojoules) applied by the electric field of one pulse, f is the frequency of pulses in $s^{-1}$, and $\dot{m}$ (m with dot thereon) is the mass transfer in kg/s. The unit if $W_{SPECIFIC}$ is kJ/kg, wherein the energy is energy applied by the electric field and the mass is the mass of the composition to which the energy is applied.

Generally, the energy delivered can be determined in two ways: (a) By calculation of U(t) x (It) dt, where U is voltatge, I is current, t is the time. In case of multiple pulses n x pulse width gives the time; and/or (b) By calculation of $E(t)^2 * k$ dt, where E is the field strength, k the conductivity and t the time. As becomes apparent from equation 1, to calculate the specific energy input in kJ/l or kJ/kg the energy delivered would have to be divided by the volume or mass flow rate.

In accordance with the present invention, the specific energy ($W_{SPECIFIC}$) applied in the method of the invention is preferably 800 kJ or less per kg of the composition of the invention, preferably 700 kJ/kg or less, 600 kJ/kg or less, 550 kJ/kg or less, 500 kJ/kg or less, 450 kJ/kg or less, 400 kJ/kg or less, 350 kJ/kg or less, 350 kJ/kg or less, 350 kJ/kg or less, 300 kJ/kg or less, 350 kJ/kg or less, 340 kJ/kg or less, 330 kJ/kg or less, 320 kJ/kg or less, 310 kJ/kg or less, 300 kJ/kg or less, 290 kJ/kg or less, 280 kJ/kg or less, 270 kJ/kg or less, 260 kJ/kg or less, or 250 kJ/kg or less.

Preferably, the specific energy is 100 kJ/kg or more, 120 kJ/kg or more, 160 kJ/kg or more, 180 kJ/kg or more, 200 kJ/kg or more, 210 kJ/kg or more, or 220 kJ/kg or more. Accordingly, the specific energy may lie within any range as determined by the above amounts, but preferably the specific energy is between 150 to 350 kJ/kg, 180 kJ/kg and 320 kJ/kg, preferably between 200 to 300 kJ/kg, more preferably between 220 and 280 kJ/kg, even more preferably between 240 and 260 kJ/kg, for example about 250 kJ/kg.

The specific energy of each pulse is given by equation 2 below.

$$W_{pulse} = \int_0^t U(t)I(t\tau)dt$$

**equation 2**

In equation 2, t is the treatment time (seconds, s), U is the voltage (V) at the electrode, I is the electrical current (A) and $\tau$ is the pulse duration.

Another parameter in a PEF treatment is the electric field strength, which may be measured in kV/cm and which is the strength of the electric field that acts on the composition in the treatment chamber. The electric field strength is defined as the electric potential difference (U) for two given electrodes in space separated by the distance (d) between them, separated by a nonconductive material (Zhang et al., J. Food Ing. 25 (1995) 261-81).

$$E = \frac{U}{d}$$

**equation 3**

According to an embodiment of the invention, the said composition is exposed to electric fields with a field strength of 5 to 40 kV/cm, for example 6 to 30 kV/cm, preferably 7 to 25 kV/cm, for example 8 to 20 kV/cm, more preferably 9 to 15 kV/cm, for example 9.5 to 14.5 kV/cm, most preferably 10 to 14 kV/cm, in particular 11 to 13 kV/cm, for example about 12 kV/cm. According to an embodiment, in said PEF treatment, said composition is exposed to electric fields with a field strength of 10 to 15 kV/cm. According to further embodiments, the field strength is < than 17, <16, <15, preferably <14, most preferably <13 kV/cm. Preferably, the field strength is >10, >11, more preferably >12 kV/cm, most preferably 12-13 kV/cm.

It is noted that the expression "critical electric field strength" is the field strength that is necessary to obtain inactivation of the microorganism. In order to do so, a transmembrane potential of more than 1 V has generally to be induced. The critical field strength thus generally depends on the cell type, the form of the microorganism, the dimensions of the microbial cell, and the type of cell-wall of the microorganism.

It is noted that the pulse duration affects the parameter of the critical field strength, since with longer pulse durations the field strength may be comparatively lower to obtain microbial inactivation.

According to an embodiment of the invention, the pulse duration in said PEF treatment is 10 $\mu$s or more, preferably 15 $\mu$s or more are applied.

According to an embodiment of the invention, the pulse length or pulse duration is not longer than 40 $\mu$s, not

longer than 35 $\mu$s, not longer than 30 $\mu$s, not longer than 27 $\mu$s, not longer than 25 $\mu$s, not longer than 24 $\mu$s, not longer than 40 $\mu$s, preferably 15 $\mu$s or more are applied.

According to an embodiment of the invention, the pulse length or pulse duration is of 5 to 35 $\mu$s, for example 10 $\mu$s to 30 $\mu$s, preferably 12 $\mu$s to 28 $\mu$s, for example 14 to 26 $\mu$s, more preferably 16 to 24 $\mu$s, for example 17 to 23 $\mu$s, most preferably 18 to 22 $\mu$s, for example 19 to 21 $\mu$s, for example about 20 $\mu$s.

Without wishing to be bound by theory, the present inventors believe that the beneficial effects of the present invention may at least partially be explained by the particular combination of specific energy, field strengths and pulse duration used for the purpose of the present invention, which are particular in that they result in inactivation of microorganisms that may be present in the composition, while retaining the activity of bioactive principles present in the composition.

According to an embodiment, in the PEF treatment of the invention, said specific energy ($W_{SPECIFIC}$), field strength and pulse duration are 100 to 400 kJ/kg, 6 to 30 kV/cm, and 10 $\mu$s to 30 $\mu$s, respectively, preferably 150 to 350 kJ/kg, 7 to 25 kV/cm, and 12 $\mu$s to 28 $\mu$s, respectively; more preferably 180 to 320 kJ/kg, 8 to 20 kV kV/cm and, 14 to 26 $\mu$s, respectively; even more preferably 200 to 300 kJ/kg, 9.5 to 14.5 kV/cm, and 17 to 23 $\mu$s, respectively; and most preferably 220 and 280 kJ/kg, 11 to 13 kV/cm, and 18 to 22 $\mu$s, respectively.

It is noted that the value of $W_{SPECIFIC}$ may be adjusted in dependence of the flow or mass transfer of the composition by varying the pulse frequency, for example, as can be deduced from equation 1 above.

According to an embodiment, the frequency (f) is 50 to 1000 Hz, for example about 100 hz.

With respect to the pulse characteristics, it is noted that electric pulses may be of different type and polarity. Pulses may be of the exponentially decaying type, of the square wave type and oscillatory decaying pulses. According to a preferred embodiment, the pulses of the PEF treatment according to the invention are square wave pulses, which are characterized in that the voltage applied by the pulse (or during the pulse length) remains substantially constant over the entire pulse duration.

Furthermore, pulses may be bipolar or monopolar. In case of monopolar pulses, only charges of one particular polarity are applied (e.g. only positive charges). According to a preferred embodiment, in the PEF treatment of the invention, bipolar electric pulses are applied, so that alternating pulses of positive and negative polarity are applied. Most preferably, bipolar square wave pulses are applied.

Without wishing to be bound by theory, it is hypothesized that the application of bipolar pulses is more effective because of the additional stress, which is thought to be induced on or in the cell membrane of microorganisms that are possibly present in the composition. Furthermore, the application of bipolar pulses minimizes the risk or occurrence of deposition of solids at the electrode surface and the consequent detrimental effect on field uniformity within the chamber.

According to a preferred embodiment of the method of the invention, in said PEF treatment, square wave electric pulses and/or bipolar pulses are applied.

The temperature of the composition before it is subjected to the method of the invention and in particular to the PEF treatment is preferably adjusted to a specific value. It is noted that due to the energy applied by way of the PEF treatment, the temperature of the composition generally raises. The composition or, more generally, the medium, is generally heated as a consequence of the PEF treatment so that the temperature of the composition at the end of the PEF treatment is generally higher than the temperature before the PEF treatment. The temperature of the composition is preferably adjusted immediately before the PEF treatment as discussed in further detail below and elsewhere in this specification.

The temperature of the composition generally plays a role with respect to both, the inactivation of microorganisms and the activity of bioactive molecules. In thermal pasteurization processes, the high temperature to which milk is subjected is responsible for the loss of bioactivity of the bioactive components of milk, for example. On the other hand, with respect to the PEF treatment in the context of the present specification, it is possible to chose a start temperature of the composition so that microbial inactivation by PEF treatment is optimized, while the bioactivity of the bioactive molecules naturally present in milk, for example, is to a higher extent retained than in case of thermal pasteurization processes. It is noted that the PEF treatment in accordance with the invention is not considered a "thermal pasteurization" process, although the temperature of the composition is slightly increased in the course of the PEF treatment due to the applied energy. On the basis of specific experiments and mathematical deduction based on literature (not shown here), the inventors could show that in the method of the invention, microbial inactivation is to a major part due to the high intensity electric pulses of the PEF treatment. Depending on process parameters >80%, in particular >90%, >95% >97% and even >99% of cfu reduction is due to the high intensity electric pulses, and only to a minor part (e.g. about <20%, even <10%, etc.) due to thermal inactivation. Process parameters maximizing inactivation by electric pulses and minimizing thermal inactivation are preferred in the context of the present invention.

In the method of the present invention, the composition may have a start and an end temperature. The start temperature of the composition is generally defined as the temperature of the composition immediately before the PEF treatment, in particular before entering the first treatment chamber. The end temperature is the temperature at the end of the PEF treatment, in particular the temperature of the composition when leaving the last treatment chamber. The end temperature generally also corresponds to the highest temperature that the composition assumes during the PEF treatment, because the PEF treatment itself only causes increase of the temperature of the composition and no decrease. If there is a sequence of PEF treatment chambers, or even of pairs of treatment chambers, one can also distinguish an intermediate temperature, for example the temperature between two subsequent treatment chambers or pairs of treatment chambers.

Interestingly, the start temperature of the composition has an influence on microbial inactivation. Without wishing to be bound by theory, it is hypothesized that membranes of the microorganisms are getting more fluid at high temperatures. At low temperatures, the membrane is generally crystalline, which may explain the lower inactivation rate by the PEF treatment. Without wishing to be bound by theory, the positive effect of higher start temperature may thus be generally attributed to the changing conformation of the phospholipid bilayer.

The present invention is at least partially based on the finding that there is a start temperature which allows obtaining substantial microbial inactivation, whereby this start temperature of the composition is such that it does not entail inactivation of desired bioactive molecules that are present in the composition.

Preferably, the start temperature of the composition is 20 to 45°C, preferably 24 to 36°C, for example 25-35°C, more preferably 26-34°C, 27-33°C, 28-32°C, 29-31°C, preferably about 30°C. The start temperature is the temperature of the composition before entering the first treatment chamber of the PEF treatment. The temperature may be adjusted using suitable heating systems, for example in a heating tank, or in continuous methods, such as using heat exchangers, for example plate heat exchangers. The temperature adjustment of the composition may be conducted batch-wise or continuously.

As mentioned elsewhere in this specification, the PEF treatment causes a slight increase of the temperature of the PEF-treated composition. It is noted that in spite of the slight increase in temperature due to the PEF-treatment, the temperature of the composition preferably remains significantly below the temperatures that is used in thermal pasteurization processes. For this reason, the activity of the bioactive molecules can be retained to a significant extent.

The PEF treatment is preferably such that the end temperature of the composition after the PEF treatment, for example after leaving the last treatment chamber, is 64°C or lower, preferably 63°C or lower, more preferably 62°C or lower, most preferably 61°C or lower, and more preferably even lower, for example 60°C, 59°C, 58°C, 57°C, 56°C, 55°C, 54°C, 53°C, 50°C or lower. Preferably, these temperatures also correspond to the maximum temperature of the composition during the entire PEF treatment, which may be controlled as disclosed in this specification.

The end temperature may be adjusted by choosing the parameters of the PEF treatment such as the treatment chamber design, the specific energy, the pulse energy, the electric field strength, and so forth, for example. For example, using a colinear treatment chamber including an inside element as discussed elsewhere in this specification surprisingly results in a lower end temperature if compared to a process where such an inside element is absent. Without wishing to be bound by theory, it is hypothesized that said inside element improves the homogeneity of the electric field to which the composition is exposed and therefore minimizes temperature increases due to the PEF treatment.

According to an embodiment, the method of the invention may comprise a step of final cooling, in particular chilling, for final stabilization of the composition. The chilling prevents growth of microorganisms that may not have been inactivated or prevents growth resulting from microbial spores that may be present in the composition. Final chilling may be to a temperature of 0 to 10°C, 1 to 8°C, 2 to 7°C, 3 to 6°C, for example about 3.5 to 5°C. It is noted that pasteurized products, including thermally pasteurized products, generally require cooling at the end of pasteurization. The cooling at the end of the PEF treatment is thus a particular embodiment of the methods of the invention. According to an embodiment, the method of the invention comprises a step of drying, preferably freeze-drying or spray drying the composition. The composition may first be cooled as indicated above, or may be directly dried following the PEF treatment. For example, the composition may be subjected to spray drying as is conventional, but preferably at low temperatures. If desired, additional dry matter (maltodextrin or other carbohydrates, protein, etc.) may be added to the composition before (spray) drying. The composition may be guided to a spray drying tower for spray drying. Interestingly, the (spray) drying process, in particular if low temperatures are used, does not necessarily result in inactivation or denaturation of bioactive molecules present in the composition. For example, a spray-drying process as disclosed in EP 0818529 may be used or in the documents referenced in this patent document. The documents cited in EP 0818529 disclose in-going air temperatures in the range of 100-180°C or even as low as 60-165°C in the spray-drying process. In US 5,116,953 spray-drying of an aqueous lactoferrin solution is disclosed (inlet air temperature of e.g. 140°C), so that spray-dried lactoferrin powder was obtained, whereby the spray-dried lactoferrin retained the iron-binding activity of lactoferrin.

Accordingly, the following the PEF treatment, the composition may be cooled and/or dried, for example spray dried.

The method of the invention preferably results in a reduction of microbial count (cfu) in the composition of at least 4 log, preferably at least 4.5 log, more preferably at least 5 log, even more preferably at least 5.5 log and most preferably 6 log or more. These values apply to any one of the microbial species present in the composition and more preferably to all of them. More preferably, these values apply to pathogenic microorganisms that can be found in milk.

According to an embodiment, the PEF treated composition obtainable by the method of the invention does not contain any detectable vegetative microorganism.

The present invention also relates to a composition that is obtained by the methods of the invention.

Accordingly, the composition of the invention, in particular a composition following treatment according to the method of the invention may be a liquid or a dried composition.

The composition preferably comprises bioactive molecules that are naturally present in raw milk. The composition may comprise raw milk itself, or a fraction thereof, or the bioactive molecules may be isolated and/or separated from raw milk and added to a composition to obtain the composition that will be subjected to the method of the invention and or to the PEF treatment in accordance with the invention. The bioactive molecules may be added by adding a milk fraction or isolated milk component comprising the bioactive molecules to another composition so as to obtain a composition that will be subjected to the treatment of the invention. The invention also encompasses the possibility that a milk fraction or component is as such subjected to the method of the invention. In accordance with the invention it is also encompassed that the composition comprises raw milk, a fraction thereof, for example skimmed milk, semi-skimmed milk, or whey, to which further ingredients, for example flavors, sweeteners, fiber, nutraceuticals in general, etc., are added. In this case, the composition comprises a milk ingredient and further ingredients, which further ingredients do not occur in milk or not in the same amount.

According to an alternative embodiment, the composition is substantially based on milk or on a milk fraction, such as those disclosed in this specification, preferably those selected from whole milk, and milk with reduced fat content (reduced fat, low fat, fat free), whey, and milk protein, and is substantially free from any added micro- and/or macronutrient.

According to an alternative embodiment, the composition is substantially based on milk or on a milk fraction, such as those disclosed in this specification, preferably those mentioned in the paragraph above, wherein the composition may comprise added flavors and/or sweeteners but is preferably substantially free of any added bioactive molecule naturally occurring in milk, and/or is substantially free of any added bioactive protein naturally occurring in milk.

"Substantially free", for the purpose of the present specification, means $\leq 5\%$, preferably $\leq 3\%$, more preferably $\leq 1\%$, even more preferably $\leq 0.5\%$ and most preferably totally free, wherein percentages are expressed as percent by weight of dry matter of the cimposition.

For the purpose of the present specification, a bioactive molecule is still active if it is capable of asserting its natural function. With respect to bioactive proteins, the bioactive protein is generally no longer active if it has been denatured. For the purpose of the present specification a protein is considered to be "bioactive" of it is present in its native, non-denatured form.

According to an embodiment, the composition comprises one or more proteins or peptides in native form. A "protein", for the purpose of the present invention, is a polypeptide comprising a sequence of about 9 or more, preferably about 25 or more and most preferably about 40 or more amino acids. Generally, to be able to perform their biological function, proteins fold into one or more specific spatial conformations. Generally, an antibody, for example, is active if it is still able to bind to the antigen to which the antibody is specific. An enzyme is active if it is capable of catalyzing its enzymatic reaction. Proteins that are capable of binding to a receptor are generally active if they retain their capacity of binding and preferably activating said receptor. Whether or not a protein is denatured (not active) may be generally assessed by using an antibody that is specific for the native protein.

Generally, the antibody does not bind to the denatured, non-active protein, or binds to the denatured protein with a substantially reduced affinity.

The expression "active molecule", for the purpose of the present specification, refers to a bioactive molecule. Instead of "Bioactive molecule", the term "a bioactive" (the plural form, "bioactives"), may be used and is considered as equivalent in this specification. For the purpose of the present invention, the suitability of the method of the invention to retain the activity of the bioactive molecules may be tested by adding to the composition a specific protein, for example an antibody, and checking the capacity of the antibody in the composition to bind to its antigen following the treatment in accordance with the method of the invention. The binding capacity may be compared with the binding capacity of an antibody present in an untreated control of the composition to which the antibody was added in the same amounts.

For assessing if a protein is present in its native form, an ELISA as described in the examples below is preferably used. Accordingly, pairs of antibodies are used that specifically bind to the native protein (which protein may also be an antibody). The comparison of the amounts of ELISA-detectable bioactive molecule in the composition before (untreated control) and after the PEF treatment, for example, allows determining how much of the protein has retained integrity after the PEF treatment, this retained integrity as detected by a conserved binding by the protein-specific antibodies used for the ELISA.

More generally, the amount of bioactive molecules in the composition of the invention or of a control composition may be determined using accepted methods for measuring bioactivity, including but not limited to HPLC, cell-based assays, enzyme-based assays, ELISA assays, flow cytometry assays (that are becoming an accepted alternative to ELISA), radio-immune assays and *in vivo* assays using animal models.

For example, accepted methods for assessing the quantity of native lactoferrin include but are not limited to chromatographic methods (Palmano et al. Journal of Chromatography, 947, 307-311, 2002), immunological techniques including ELISA (Desmazeaud, Bulletin of International Dairy Federation vol. 284, Lactoferrin (pp. 29-42), 1993) and biosensor immunoassays (Indyk et al., International Dairy Journal, 15(5),: 429-438, 2005). The integrity of lactoferrin, immunoglobulins, growth factors and other proteins may be measured as described in the examples below. Caseinglycomacropeptide (CGMP or glycomacropeptide GMP, how it may also be named) is released from kappa-casein through rennet mediated casein coagulation step (through the action of chymosin). It is found in the whey fraction that is known as sweet whey or cheese whey. CGMP can be recovered and thus quantified by anion exchange. It is a bone health promoting agent.

The preferred method for determining the total, absolute amount of a specific protein in accordance with the invention, including the amount of specific protein in denatured and/or native form, is disclosed further below.

The bioactive molecule referred to herein may be selected independently from native proteins, bioactive lipids, sialic acid, nucleotides, oligosaccharides, amino acids, taurine and vitamins.

Preferably, said bioactive molecules are independently selected from one or more of the group consisting of: one or more of proteins present that are naturally present in milk; one or more lipids that are naturally present in milk; one or more vitamins that are naturally present in milk, sialic acid, nucleotides, oligosaccharides, amino acids and taurine, for example.

According to the present invention, the composition of the invention comprises protein-based milk bioactives. At the same time, the method of the present invention preferably does not affect, in particular partially or totally reduce, the activity of other bioactive molecules, such as those that are temperature sensitive. In particular, the composition of the invention comprises active vitamins that are naturally occurring in milk.

According to a preferred embodiment of the invention, said one or more bioactive molecule is selected from bioactive proteins. Said protein is preferably selected from antimicrobial factors, immunoglobulins growth factors, cytokines and/or pro-/anti-inflammatory factors, chemokines, enzymes, including digestive enzymes, protein hormones, transporters, glycomacropeptide, $\alpha$-lactalbumin, $\beta$-lactoglobulin, proteins of the milk fat globule membrane, and combinations of two or more of the aforementioned, wherein at least 30% of the respective protein is in a native form. Preferably, these native proteins are present in the PEF treated composition in relative or absolute amounts as specified elsewhere in this specification.

According to an embodiment, the composition of the invention comprises native antimicrobial factors, which may be selected from the group consisting of immunoglobulins, lactoferrin, lysozyme, antimicrobial peptides such as $\beta$-defensins, complement C3 and combinations of two or more of the aforementioned.

Immunoglobulins may comprise one or more selected from IgA, IgE, IgG and IgM in native form, and combinations of two or more of these. These immunoglobulins are reported to occur in cow's milk. The immunoglobulins may further comprise IgD. Preferably, immunoglobulins are IgA and IgG.

Some immunoglobulins have different subtypes. The composition of the invention may comprise one, a combination of several or all subtypes of a given immunoglobulin naturally occurring in milk. Subtypes of IgA are IgA1 and/or IgA2. Subtypes of IgG are the IgG1, IgG2a, IgG 2b, IgG2c, IgG3, IgG 4 subtypes. The composition may comprise one, a combination of two or more or all subtypes of IgA, IgG and possibly other IgGs, in particular in native form.

According to an embodiment, the composition of the invention comprises growth factors in native form, which may be selected from epidermal growth factors (EGFs), nerve growth factor (NGF), insulin-like growth factors (IGFs), transforming growth factors (TGFs), bovine colostral growth factor (BCGF), vascular endothelial growth factor (VEGF), growth hormone (GH), mammary-derived growth factors (MDFGs), macrophage-colony stimulating factor (M-CSF), granulocyte-macrophage colony stimulating factor (GM-CSF) and combinations of two or more of the aforementioned, for example.

TGF includes, in particular, TGF-$\beta$. For example, the composition of the invention comprises native TGF-$\beta$1 and/or native TGF-$\beta$2.

According to an embodiment, the composition of the invention comprises cytokines, chemokines in native form and/or pro-/anti-inflammatory factors in native form, such as those which may be selected from tumor necrosis factors (TNFs), interleukins (IL) such as IL-1, -2, -4, -5, -6, -8, -10, interferon (IFN)-$\gamma$, TGFs, $\alpha$1-antitrypsin, $\alpha$1-antichymotrypsin, prostaglandins, platelet-activating factor, monocyte chemotactic protein (MCP)-1, RANTES (regulated on activation, normal T cell expressed and secreted) and combinations of two or more of the aforementioned.

According to an embodiment, the composition comprises of the invention native enzymes, for example active digestive enzymes such as those selected from the group of amylase, bile acid-stimulating esterase, bile-acid stimulating lipase, lipoprotein lipase, proteases such as plasmin, or active non-digestive enzymes such as those selected from alkaline phosphatase, lactoperoxidase, lysozyme, and combinations of two or more of the aforementioned.

According to an embodiment, the composition of the invention comprises active/native hormones, for example those selected from the group of insulin, prolactin, oxytocin, feedback inhibitor of lactation (FIL), thyroid hormones, steroid hormones, corticosteroids, adrenocorticotropic hormone (ACTH), bombesin, cholecystokinin, estrogens, gastrin, growth hormone releasing hormone (GHRH), neurotensin, parathyroid hormone (PTH), testosterone, thyroid stimulating hormone (TSH), thyrotropin releasing hormone (TRH), vasoactive intestinal peptide (VIP), calcitonin, parathyroid hormone, erythropoietin and combinations of two or more of the aforementioned. Preferably, the composition comprises one or more protein-based hormones in native form.

According to an embodiment, the composition of the invention comprises active transporter proteins, for example those selected from the group of lactoferrin, folate binder, IGF binder, cobalamin binder, thyroxine binder, corticosteroid binder, vitamin binders and combinations of two or more of the aforementioned.

According to a preferred embodiment, the composition comprises one or more native proteins selected from native immunoglobulins, native lactoferrin, native β-lactoglobulin, native α-lactalbumin and native TGF-β.

According to an embodiment, the composition of the invention comprises active vitamins. In particular, the PEF treatment of the composition has little impact on several, most or all of the vitamins that are naturally occurring in milk. Therefore, the composition of the invention comprises water and/or fat soluble vitamins. The composition preferably comprises one or more vitamins selected from (non exhaustive list) the group of vitamin A, D, E, K, B1 (thiamin), B2 (riboflavin), B3 (Niacin), B5 (panthothenic acid), B6 (pyridoxine), B7 (biotin), B9 (folate), B12 (cobalamin), and C (L-ascorbate). Preferably, the composition comprises the water-soluble vitamins naturally present in milk, which are the above said with the exception of vitamin A and E.

The vitamins referred to above include all forms of such vitamins that can be adsorbed and utilized by the metabolism of humans. Reference to vitamin E includes and preferably consists of α-tocopherol and γ-tocopherol; reference to vitamin C includes ascorbic acid and dehydroascorbic acid; vitamin A refers to retinol equivalents (RE).

According to an embodiment, the composition of the invention comprises at least one protein having an amino acid sequence corresponding to that of a bioactive protein naturally occurring in milk, wherein at least 30% of said protein is present in a native form. The preferred amounts and percentages as given elsewhere in this specification with respect to specific bioactive proteins apply also to this embodiment.

It is noted that a denatured protein generally has no longer the biological activity of the original, folded protein as occurring in raw milk. Although the denatured protein still has the same amino acid sequence as the non-denatured, active one, an antibody that is specific for the active protein generally is not binding, or binding with a substantially reduced affinity, to the denatured, inactive protein. Therefore, the protein may still be present in a, for example thermally pasteurized composition, but the protein is no longer native/active.

According to an embodiment, the composition of the invention comprises 30% or more, preferably 40%, more preferably 50% or more, in particular 60%, 65%, 70%, 75%, 80%, 85%, 90%, 95%, or more of a specific protein in a native form, compared to the total amount of said protein in said composition.

For the purpose of the present specification, percentages apply to mol.-percent or weight percent, since percentages refer to a specific protein of a given molecular mass. The percentage may be determined by methods as specified elsewhere in this specification.

The total or absolute amount of any specific protein, including denatured and/or degraded and native protein in a composition may be determined analytically. The preferred method to be used in accordance with the present invention is based on liquid chromatography-high-resolution selected reaction monitoring mass spectrometry (LC-HSRM-MS). The method is disclosed for the milk fat globule membrane proteins by B. Y. Fong and C. S. Norris "Quantification of Milk Fat Globule Membrane Proteins Using Selected Reaction Monitoring Mass Spectrometry" J. Agric. Food Chem. 2009, 57, 6021-6028. This method can be adapted to any protein by identifying specific cleavage peptide sequences that can be generated using proteases followed by quantifying these peptides by mass spectrometry to determine/ calculate the total specific protein amounts.

Therefore, by quantifying native protein by ELISA and total protein using LC-HSRM-MS, it can be determined what percentage of any specific protein (for example, lactoferrin) is present in native form in a given composition.

Thus, ELISA and LC-HSRM-MS may both be used to determine the quantity of a specific protein in a sample, whereas ELISA is only suitable to quantify the protein in its native form. Therefore, when a sample of a composition does not contain any denatured protein (e.g. untreated raw milk), both methods yield the same result with good correspondence.

One can also standardize one method (e.g. ELISA) to the other (e.g. LC-HSRM-MS) on the basis of a sample that contains the respective protein only in native form. This may help reducing the error margin when determining the quantity of native protein in a sample that also contains denatured protein.

For the purpose of the present specification the percentages indicated in this specification may include an error margin of ≤ 15%, preferably ≤ 10%, more preferably ≤ 5%, even more preferably ≤ 3% and most preferably ≤ 2%. The terms "about" and/or "substantially", unless otherwise defined and if referring to any specific value, is intended to mean ± 15% of the respective value, preferably ± 10%, more preferably ± 5%, even more preferably ± 3% and most preferably ± 2%.

For the purpose of the present specification, the expression "specific protein" refers to a protein of a given amino acid sequence or belonging to a group of proteins with highly identical sequences and similar functions. For example all IgA contained in a sample or composition are generally considered a specific protein, but also the sum of IgA of any specific subtype of IgA may be considered as a specific protein. Preferably, the expression "specific protein" refers to proteins that are quantifiable as a unit or entity with the methods enclosed herein. To illustrate this, ELISA is preferably used to quantify all native IgA present in a sample. On the other hand, there are more specific ELISA tests that are capable of identifying a subtype of a given protein family, for example a subtype of IgA.

According to an embodiment, the composition of the invention comprises active IgA, including one or more subtypes as indicated elsewhere in this specification. Preferably, the composition comprises 30% or more, preferably 35%, 40%, 50%, 60%, 65%, 70%, 75%, 80%, 85%, 90%, 95%, or more IgA in active form if compared to the total of IgA in the composition.

The "total" of IgA, or of any other specific protein (such as IgG, lactoferrin, etc.), means the sum of native and denatured IgA present in the composition or sample.

The concentration of IgA in a particular sample of untreated raw milk was found to be 135 μg/mL. The composition of the invention preferably comprises native IgA at an amount of about the above percentages of 135 μg/mL.

According to an embodiment, the composition comprises native IgG, including one or more subtypes as indicated elsewhere in this specification. Preferably, the composition comprises 30% or more, preferably 50%, 60%, 65%, 70%, 75%, 80%, 85%, 90%, 95%, or more IgG in native form if compared to the total of IgG in the composition.

The concentration of IgG in a particular sample of raw milk was found to be about 860 μg/mL. The composition of the invention preferably comprises IgG at an amount of about the above percentages of 860 μg/mL.

According to an embodiment, the composition comprises native IgE. Preferably, the composition comprises 30% or more, preferably 50%, 60%, 65%, 70%, 75%, 80%, 85%, 90%, 95%, or more IgE in native form if compared to the total of IgE in the composition.

According to an embodiment, the composition comprises native IgM. Preferably, the composition comprises 30% or more, preferably 50%, 60%, 65%, 70%, 75%, 80%, 85%, 90%, 95%, or more IgM in native form if compared to the total of IgM in the composition.

According to an embodiment, the composition preferably comprises native lactoferrin. Lactoferrin has anti-microbial, antioxidants, anti-carcinogenic and anti-inflammatory properties. Preferably, the composition comprises 30% or more, preferably 50%, 60%, 70%, 75%, 77%, 80%, 82%, 85%, 90%, 95%, or more lactoferrin in native form if compared to the total of lactoferrin in the composition. According to an embodiment, the composition comprises lactoferrin, wherein at least 75% of the total lactoferrin in said composition is present in native form.

The concentration of lactoferrin in particular samples of untreated raw milk was found to be about 150-200 mg/L. The composition of the invention preferably comprises native lactoferrin at an amount of the above percentages of 150 mg/L.

According to an embodiment, the composition comprises native lysozyme. Preferably, the composition comprises 30% or more, preferably 50%, 60%, 65%, 70%, 75%, 80%, 85%, 90%, 95%, or more lysozyme in native form if compared to the total of lysozyme in the composition.

According to an embodiment, the composition comprises native EGF. Preferably, the composition comprises 30% or more, preferably 50%, 60%, 65%, 70%, 75%, 80%, 85%, 90%, 95%, or more EGF in native form if compared to the total of EGF in the composition.

According to an embodiment, the composition comprises native NGF. Preferably, the composition comprises 30% or more, preferably 50%, 60%, 65%, 70%, 75%, 80%, 85%, 90%, 95%, or more NGF in native form if compared to the total of NGF in the composition.

According to an embodiment, the composition comprises native IGF. Preferably, the composition comprises about 30% or more, preferably 50%, 60%, 65%, 70%, 75%, 80%, 85%, 90%, 95%, or more IGF in native form if compared to the total of IGF in the composition.

According to an embodiment, the composition comprises native TGF. Preferably, the composition comprises about 30% or more, preferably 50%, 60%, 65%, 70%, 75%, 80%, 85%, 90%, 95%, or more TGF, in particular TGF-β1 and/or TGF-β2, in native form if compared to the total of TGF, in particular TGF-β1 and/or TGF-β, in the composition.

The concentration of TGF-β1 in a particular sample of untreated raw milk was found to be about 0.35 ng/mL. The composition of the invention preferably comprises native TGF-β1 at an amount of about the above percentages of 0.35 ng/mL.

The concentration of TGF-β2 in a particular sample of untreated raw milk was found to be about 40 ng/mL. The composition of the invention preferably comprises native TGF-β2 at an amount of about the above percentages of 40 ng/mL.

According to an embodiment, the composition comprises native interleukins. Preferably, the composition comprises 30% or more, preferably 50%, 60%, 65%, 70%, 75%, 80%, 85%, 90%, 95%, or more interleukins in native form if compared to the total of interleukins in the composition.

According to an embodiment, the composition comprises native INF-γ. Preferably, the composition comprises 30% or more, preferably 50%, 60%, 65%, 70%, 75%, 80%, 85%, 90%, 95%, or more INF-γ in native form if compared to the total of INF-γ in the composition.

According to an embodiment, the composition comprises native α1-antitrypsin. Preferably, the composition comprises 30% or more, preferably 50%, 60%, 65%, 70%, 75%, 80%, 85%, 90%, 95%, or more α1-antitrypsin in native form if compared to the total of α1-antitrypsin in the composition.

According to an embodiment, the composition comprises native amylase. Preferably, the composition comprises 30% or more, preferably 50%, 60%, 65%, 70%, 75%, 80%, 85%, 90%, 95%, or more amylase in native form if compared to the total of amylase in the composition.

According to an embodiment, the composition comprises native bile acid-stimulating esterase. Preferably, the composition comprises 30% or more, preferably 50%, 60%, 65%, 70%, 75%, 80%, 85%, 90%, 95%, or more bile acid-stimulating esterase in native form if compared to the total of bile acid-stimulating esterase in the composition.

According to an embodiment, the composition comprises native bile-acid stimulating lipase. Preferably, the composition comprises 30%, or more, preferably 50%, 60%, 65%, 70%, 75%, 80%, 85%, 90%, 95%, or more bile-acid stimulating lipase in native form if compared to the total of bile-acid stimulating lipase in the composition. According to an embodiment, the composition comprises native lipoprotein lipase. Preferably, the composition comprises 30% or more, preferably 50%, 60%, 65%, 70%, 75%, 80%, 85%, 90%, 95%, or more lipoprotein lipase in native form if compared to the total of lipoprotein lipase in the composition.

According to an embodiment, the composition comprises native prolactin. Preferably, the composition comprises 30% or more, preferably 50%, 60%, 65%, 70%, 75%, 80%, 85%, 90%, 95%, or more prolactin in native form if compared to the total of prolactin in the composition.

According to an embodiment, the composition comprises native oxytocin. Preferably, the composition comprises 30% or more, preferably 50%, 60%, 65%, 70%, 75%, 80%, 85%, 90%, 95%, 96%, 97%, 98%, 99% or more oxytocin in native form if compared to the total of oxytocin in the composition.

According to an embodiment, the composition comprises native folate binder. Preferably, the composition comprises 50% or more, preferably 60%, 65%, 70%, 75%, 80%, 85%, 90%, 95%, or more folate binder in native form if compared to the total of folate binder in the composition.

According to an embodiment, the composition comprises native IGF binder. Preferably, the composition comprises 50% or more, preferably 60%, 65%, 70%, 75%, 80%, 85%, 90%, 95%, or more IGF binder in native form if compared to the total of IGF binder in the composition.

According to an embodiment, the composition comprises native α-lactalbumin. Preferably, the composition comprises 50% or more, preferably 60%, 65%, 70%, 75%, 80%, 85%, 90%, 95%, or more α-lactalbumin in native form if compared to the total of α-lactalbumin in the composition.

According to an embodiment, the composition comprises native β-lactoglobulin. Preferably, the composition comprises 50% or more, preferably 60%, 65%, 70%, 75%, 80%, 85%, 90%, 95%, or more β-lactoglobulin in native form if compared to the total of β-lactoglobulin in the composition.

According to an embodiment, the composition comprises one or more selected from native lactoferrin, native IgA, native IgG, native TGF-β1, native TGF-β2 and combinations thereof.

According to an embodiment, the PEF treated composition of the invention comprises lactoferrin, IgA, IgG, TGF-β1, and TGF-β2 in native form in amounts corresponding to at least 50% of lactoferrin, at least 30% of IgA, at least 50% IgG, at least 50% of TGF-β1, and at least 50% of TGF-β2 in native form, with respect to the total amount of the respective protein in the composition.

Preferably, the composition comprises at least 60%, preferably 65% or more, 70% or more, 75% or more, 80% or more of native lactoferrin; 40% or more, 45% or more, 50% or more, 55% or more 56% or more of native IgA; 60% or more, 65% or more, 70% or more, 77% or more 80% or more of native IgG; 55% or more, 60% or more, 70% or more, 75% or more 80% or more of native TGF-β1; and/or 60% or more, 70% or more, 80% or more, 85% or more 90% or more of native TGF-β2, wherein said percentages refer to the total amount of the respective protein in the composition.

According to an embodiment, the PEF-treated composition comprises one or more selected from: at least 38 mg/L native lactoferrin, at least 40.5 μg/mL IgA, at least 434 μg/mL IgG, at least 0.19 ng/mL of native TGF-β1, and at least 20.7 ng/mL of native TGF-β2.

According to an embodiment, the PEF-treated composition comprises one or more selected from: at least 50 mg/L native lactoferrin, at least 60 μg/mL IgA, at least 600 μg/mL IgG, at least 0.25 ng/mL of native TGF-β1, and at least 30 ng/mL of native TGF-β2.

According to an embodiment, the PEF-treated composition comprises one or more selected from: at least 60 mg/L native lactoferrin, at least 70 μg/mL IgA, at least 700 μg/mL IgG, at least 0.30 ng/mL of native TGF-β1, and at least 35 ng/mL of native TGF-β2.

According to an embodiment, the composition of the invention comprises or more bioactive vitamins selected from the group of A, D, E, K, B1, B2, B3, B5, B6, B7, B9, B12, and C.

According to an embodiment, the composition of the invention comprises vitamin A. Vitamin A is generally completely destroyed by thermal pasteurization. Preferably, the composition comprises 50%, 60%, 70%, 80%, 85%, 90%, 95% or more of vitamin A in an active form, compared to an untreated control.

In a sample of untreated raw milk, 300 μg vitamin A per kg (per kg raw milk) were found. The composition of the invention preferably comprises, in particular if it is whole milk, at least the absolute amounts of vitamin A in whole milk corresponding to the above percentages. In other words, the composition comprises 150 μg (50%) or more, 180 μg (60%) or more, 210 μg (70%) or more, 240 μg (80%) or more, 255, μg (85%) or more, 270 μg (90%) or, 285 μg (95%) or more vitamin A per kg of the composition.

According to an embodiment, the composition comprises vitamin K. Preferably, the composition comprises 80%, 85%, 90%, 95%, 96%, 97%, 98% or 99% or more of vitamin K in an active form, compared to an untreated control. In whole milk about 45 μg vitamin K per kg were found. The composition of the invention preferably comprises, in particular if it is whole milk, at least the absolute amounts of vitamin K in whole milk corresponding to the above percentages (as illustrated with respect to vitamin A).

According to an embodiment, the composition comprises vitamin D. Preferably, the composition comprises 80%, 85%, 90%, 95%, 96%, 97%, 98% or 99% or more of vitamin D in an active form, compared to an untreated control. Whole milk was found to comprise about 10 μg vitamin D per kg. The composition of the invention preferably comprises, in particular if it is whole milk, at least the absolute amounts of vitamin D in whole milk corresponding to the above percentages.

According to an embodiment, the composition comprises vitamin E. Preferably, the composition comprises 80%, 85%, 90%, 95%, 96%, 97%, 98% or 99% or more of vitamin E in an active form, compared to an untreated control.

Since vitamins K, D and E are more stable with respect to temperature, the difference in levels of these vitamins in the composition of the invention compared to thermal pasteurization is smaller.

The amounts of water soluble vitamins present in whole milk correspond substantially to the amounts present in semi-skimmed milk, skimmed milk, reduced fat milk, low fat milk or non-fat milk, as these vitamins are substantially present in the non-fat fraction of whole milk.

According to an embodiment, the composition comprises B1 (thiamin). Preferably, the composition comprises 50%, 60%, 70%, 80%, 85%, 90%, 95% or more of vitamin B1 in an active form, compared to an untreated control.

In a sample of whole untreated raw milk about 400 μg vitamin B1 per kg were determined. The composition of the invention preferably comprises at least the absolute amounts of vitamin B1 as found in whole milk corresponding to the above percentages. In other words, the composition of the invention comprises 250 μg (50%) or more, 300 μg (60%) or more, etc., of vitamin B1.

According to an embodiment, the composition comprises B2 (riboflavin). Preferably, the composition comprises 50%, 60%, 70%, 80%, 85%, 90%, 95% or more of vitamin B2 in an active form, compared to an untreated control. Whole untreated milk comprises was found to have about 1600 μg vitamin B2 per kg. The composition of the invention preferably comprises at least the absolute amounts of vitamin B2 as found in whole milk corresponding to the above percentages.

According to an embodiment, the composition comprises B3 (niacin). Preferably, the composition comprises 50%, 60%, 70%, 80%, 85%, 90%, 95% or more of vitamin B3 in an active form, compared to an untreated control. Whole untreated milk was found to have about 800 μg vitamin B3 per kg. The composition of the invention preferably comprises at least the absolute amounts of vitamin B3 as found in whole milk corresponding to the above percentages.

According to an embodiment, the composition comprises B5 (pyridoxine). Preferably, the composition comprises 50%, 60%, 70%, 80%, 85%, 90%, 95% or more of vitamin B5 in an active form, compared to an untreated control. Whole untreated milk comprises about 3000 μg vitamin B6 per kg. The composition of the invention preferably comprises at least the absolute amounts of vitamin B5 as found in whole milk corresponding to the above percentages.

According to an embodiment, the composition comprises B6 (pyridoxine). Preferably, the composition comprises 50%, 60%, 70%, 80%, 85%, 90%, 95% or more of vitamin B6 in an active form, compared to an untreated control. Whole untreated milk was found to contain about 400 μg vitamin B6 per kg. The composition of the invention preferably comprises at least the absolute amounts of vitamin B6 as found in whole milk corresponding to the above percentages.

According to an embodiment, the composition comprises B7 (biotin). Preferably, the composition comprises 50%, 60%, 70%, 80%, 85%, 90%, 95% or more of vitamin B7 in an active form, compared to an untreated control. Whole untreated milk was found to contain about 20 μg vitamin B7 per kg. The composition of the invention preferably comprises at least the absolute amounts of vitamin B6 as found in whole milk corresponding to the above percentages.

According to an embodiment, the composition comprises B9 (folate). Preferably, the composition comprises 50%, 60%, 70%, 80%, 85%, 90%, 95% or more of vitamin B9 in an active form, compared to an untreated control. Whole untreated milk was found to contain about 50 μg vitamin B9 per kg. The composition of the invention preferably comprises at least the absolute amounts of vitamin B9 in whole milk corresponding to the above percentages.

According to an embodiment, the composition comprises B12 (cobalamin). Preferably, the composition comprises 50%, 60%, 70%, 80%, 85%, 90%, 95% or more of vitamin B9 in an active form, compared to an untreated control. Whole untreated milk comprises about 4 μg vitamin B12 per kg. The composition of the invention preferably comprises at least the absolute amounts of vitamin B12 as found in whole milk corresponding to the above percentages.

According to an embodiment, the composition comprises vitamin C. Preferably, the composition comprises 50%, 60%, 70%, 80%, 85%, 90%, 95% or more of vitamin C in an active form, compared to an untreated control. Whole untreated milk was found to contain about 10 mg vitamin C per kg. The composition of the invention preferably comprises at least the absolute amounts of vitamin C as found in whole milk corresponding to the above percentages.

Several vitamins, in particular one or more of the vitamins A, B1, B6, B9, B12, C, and thiamine are sensitive to heat. Generally, at least 10% of these vitamins lose their activity, for example due to destruction, in the course of a standard UHT treatment, of milk or raw milk, for example. Vitamin A is particularly sensitive to UHT or thermal pasteurization and up to 100% of this vitamin is lost in these processes.

Therefore, the composition of the invention comprises at least 30%, of one or more of these vitamins (A, B1, B6, B9, B12, C) if compared to an untreated control, preferably at least 50%, 60%, 70%, 80%, 90, 95% more preferably at least 96%, 97% and 98% if compared to an untreated control. The above values may not apply for vitamin A, in particular in case the composition is fat free or has a reduced fat content.

In the course of a standard thermal pasteurization, one or more of the vitamins A, B12, C, and thiamine at least partially lose their activity, for example due to destruction. Generally, thermal pasteurization causes a loss of at least 10% of these vitamins. The composition of the invention comprises at least 30% of one or more of these vitamins if compared to an untreated control, preferably at least 50%, 60%, 70%, 80%, 85%, 90%, 92%, 94%, 95%, more preferably at least 96%, 97% and 98% if compared to an untreated control.

If the composition, in particular the untreated control is milk, for example raw milk, the percentages of vitamins and other bioactive molecules may be used to determine the absolute content of the molecule in the composition, on the basis of the absolute amounts given in this specification for the respective molecule in untreated raw milk.

According to an embodiment, even if the composition is not milk or raw milk, but comprises one or more of the bioactive molecules specified herein, the composition preferably comprises said molecule at the absolute amounts indicated or derivable from the present specification. The absolute amounts may in particular be derived from the amount of the molecule found in raw milk and/or from the percentages of active/native molecule as indicated in this specification.

The composition of the invention preferably has a viable microbial count that is lower than $10^5$ cfu per gram of the composition. Regarding microbial loads that are considered acceptable or that may not be trespassed, it is also referred to the "Verordnung über Hygiene- und Qualitätsanforderungen an Milch und Erzeugnisse auf Milchbasis (Milchverordnung)", vom 20. Juli 2000, Bundesgesetzblatt Jahrgang 2000 Teil I Nr. 26, S. 1178 vom Juli 2000, zuletzt geändert durch Bundesgesetzblatt Jahrgang 2004 Teil I Nr. 58, S. 2794 vom 12. November 2004. See in particular "Anlage 6", in particular chapter 3.1.1 concerning requirements on pasteurized milk.

Preferably, the composition has a cfu count that is lower than $10^5$ cfu per gram of the composition after 2, 4, 6, 8, 10, 12, 14, 16 or more days following the PEF treatment in accordance with the present invention. During these time intervals, the composition is kept at 4°C. Viable count is determined by incubation at 30°C on petri-dishes and counting colony forming units.

Preferably, the composition has a cfu count that is lower than $5\times10^4$ cfu per gram of the composition after 2, 4, 6, 8, 10, 12, 14, 16 or more days following the PEF treatment in accordance with the present invention. During these time intervals, the composition is kept at 4°C.

Preferably, the composition has a cfu count that is lower than $10^4$ cfu per gram of the composition after 2, 4, 6, 8, 10, 12, 14, 16 or more days following the PEF treatment in accordance with the present invention. During these time intervals, the composition is kept at 4°C.

Preferably, the composition has a cfu count that is lower than $5\times10^3$ cfu per gram of the composition after 2, 4, 6, 8, 10, 12, 14, 16 or more days following the PEF treatment in accordance with the present invention. During these time intervals, the composition is kept at 4°C.

According to an embodiment, the composition of the invention has a shelf life and/or stability that is substantially identical to the stability as the shelf life of an otherwise comparable composition treated by thermal pasteurization. In particular, the shelf life of the composition in days, when kept at 4°C, is substantially the same as that of a comparable thermally pasteurized composition.

For the purpose of the present specification, a composition is considered as "nutritionally safe" and/or "microbiologically safe" if it has a microbial count (cfu) of less than $10^5$, preferably less than $5\times10^4$, even more preferably less than $5\times10^4$, for example less than $10^4$, most preferably less than $5\times10^3$ cfu/g of the composition. In order to be nutritionally and/or microbiologically safe, these microbial count do preferably not exceed the indicated values for a period of at least 4 days, preferably at least 6, 8, 10 and most preferably 10 days when the composition is stored at 4°C and following the PEF treatment in accordance with the invention. Preferably, the composition is nutritionally safe if, after storage for 10 days at 4°C, the microbial count does not exceed $10^4$ cfu/g.

Most preferably, a composition is microbiologically safe if it does not contain any detectable vegetative pathogenic microorganism, in particular in a sample of 25 ml (see "Milchverordnung" referenced above). According to an embodiment, the composition does not contain any detectable pathogenic vegetative microorganisms.

The conductivity of the composition of the invention is 2 to 10 mS/cm, preferably 2.5 to 7.0 ms/cm, more preferably 3 to 5 mS/cm, for example 3.5 to 4.5 mS/cm, most preferably 3.7 to 4.3 mS/cm, for example about 4 mS/cm.

The beneficial properties of the bioactive molecules encompassed by the present specification are to a large extent reported in the literature. For example, lactoferrin has antioxidant, anti-carcinogenic, and anti-inflammatory properties. For example, antibodies such as IgA and IgG confer passive protection to pathogens such as viruses or bacteria. For example, TGF-βs are essential in developing and maintaining appropriate immune responses in infants and may provide protection against adverse immunological outcomes such as allergy development or chronic inflammatory conditions. For example, vitamins act as catalysts and are thus essential in various body processes. For example, growth factors are important for regulating a variety of cellular processes by stimulating cellular growth, proliferation and cellular differentiation. For example, cytokines, chemokines and pro-/anti-inflammatory factors are immunomodulating agents essential for efficient immunity. For example, digestive enzymes are essential to optimal digestion of milk by neonates. For example, hormones are messenger that transports a signal from one cell to another throughout an organism and thus have impacts on immunity, metabolism, body development and response to its environment. For example, transporter proteins are helping in the assimilation of macro- or micro-nutrients by the epithelium.

The composition of the invention may be used for treating and/or preventing any disease or condition associated with or corresponding to any one or more of the above-said, or may be used for promoting health in accordance with any one or more of the above-mentioned biological activities. The invention also relates to a method of treatment, the method comprising the step of administrating, to an individual in need thereof, an efficient and/or sufficient amount of the composition of the invention.

**Examples**

The following examples are illustrative of some of the products and methods of making the same falling within the scope of the present invention. They are not to be considered in any way limitative of the invention. Changes and modifications can be made with respect to the invention. The skilled person will recognize many variations in these examples to cover a wide area of formulas, ingredients, processing and mixtures to rationally adjust the nutrients and other elements of the invention for a variety of applications.

Example 1: PEF System

As shown in **Figure 2,** a A PEF system 10 comprising a power supply 11 (DIL Power Supply ELCRACK® HVP5), capacitors 12, transistors 13 (IGBT-Insulated Gate Bipolar Transistor) and a transformer 14 (DIL High Voltage Transformer ELCRACK® HVP5) was constructed. The power supply 11 can convert alternating current to direct current at an intermediate voltage level to charge the capacitors. The transistors 13 can periodically discharge the capacitors and generate a pulsed current, defining the maximum output current. Making use of multiple transistors, the setup allows to emit positive or negative pulses. For emitting a positive pulse, two transistors 13, which are in diagonally arranged lines, are switched on. By a pulse transformer the voltage level of the discharge pulses is increased, while the peak current is decreased. The setup allows a maximum voltage of 24 kV and a maximum current of 200 A at the treatment chamber 1. To obtain bipolar pulses, the polarity is changed after each pulse. Therefore, every second pulse, the diagonally arranged transistors will be switched on.

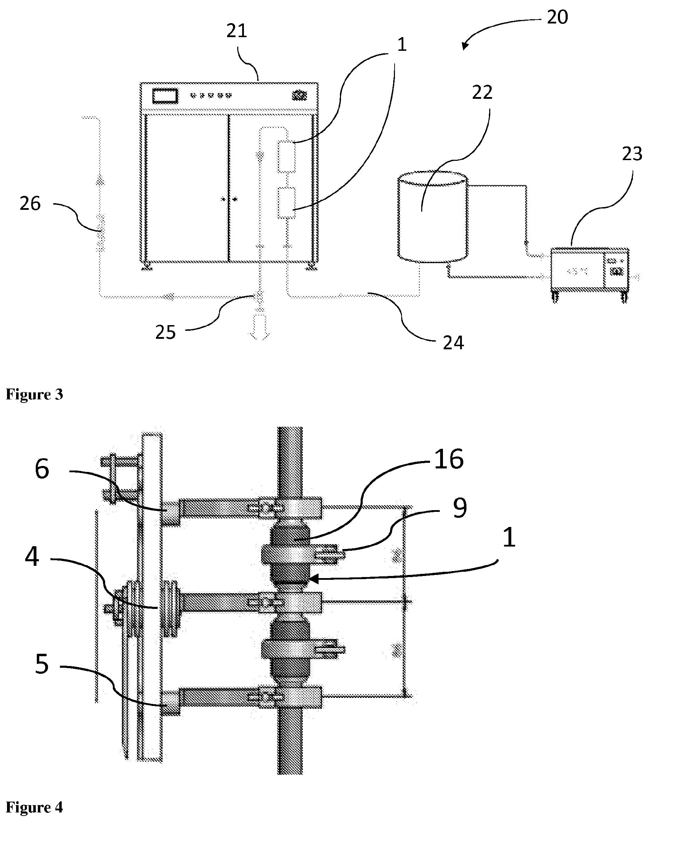

The system comprised four treatment chambers, in particular two pairs of treatment chambers. A pair of colinear treatment chambers can be seen in **Figure 4,** with 4 being the supply of power to a charged electrode and 6 and 5 indicating ground straps, which here is located up- and downstream of the central electrode, respectively, in accordance with the schematic representation of Figure 1. **Figure 5** shows in more detail the construction of a treatment chamber 1. The electrodes 4 and 6, made from titanium can be seen, as well as a casing structure, cover or housing 16, which is made from insulating material, and which can be clamped by clamp 9 so as to keep the treatment chamber together as a functional unit. In this manner, the treatment chamber can be disassembled by detaching clamp 9, for example for the purpose of cleaning. At the bottom of the treatment chamber 1, an upstream end of the inset element 30 can be seen, which can be seen in greater detail in Figure 6.

**Figure 6** shows the details of the colinear treatment chamber 1, with the reference numbers used for Figure 5 referring to the same structural elements. Two o-rings 17 form a seal between the two electrodes 4, 6 and the insulating connector 8. Also an inside element 30 having a form reminding of a torpedo can be seen, which occupies an axial, central position within the treatment chamber and which reduces laminar flow by compelling the liquid to move close to the inner walls of the treatment chamber as disclosed in PCT/EP2011/051149 and DE 10 2010 001 279.3, entitled: "Vorrichtung und Verfahren zur Hochspannungsimpulsbehandlung im Ringspalt". The colinear treatment chamber of Figure 6 has a diameter of 10 mm. As can be seen in Figure 6, the casing 16 is made of two separate insulting pieces, which are hold together by clamp 9. By releasing clamp 9, all individual pieces of the treatment chamber can be separated from each other. In the lumen 2 of the treatment chamber, the connection and separation of the two electrodes 4, 6 is made by the insulating connector 8.

Further treatment chamber designs that were tested include a colinear treatment chamber as the one of Figure 6, but without "torpedo" inset and having a smaller diameter of 7 mm. Also a treatment chamber with a so-called field-concentration design was used (not shown).

Example 2: PEF-Treatment of Raw Milk

For all experiments, raw milk was obtained from a farmer near Quakenbrück, Germany. The raw milk was filled into a double walled tank 22 (**Figure 3**) and heated up to the desired temperature of 20°C, 25°C or 30°C using the heating bath that is controlled by heater 23. For the experiments, the PEF system as described in Example 1 was used. The flow rate of the raw milk was adjusted to 30 L/h against a counter pressure of 2 bars and the pulse duration was kept constant at 20 $\mu$s. The specific energy was varied with the setting of the pulse frequency (see equation 1 above). Trials started with a frequency of 50 Hz and frequency was increased step wise to the maximum capacity of the PEF system.

Figure 3 illustrates the entire installation 20 that is suitable to perform the methods of the invention and that was used for the present examples. The PEF system 10 is the ELCRACK HVP 5 system described in Example 1 above. The product passes through product path 24 in the direction indicated by the arrows. An outlet 25 is provided downstream the two treatment chambers 1. A cooler 26 is provided downstream the PEF treatment system 10, which allows cooling down the temperature for storing at 4°C, for example.

Temperature increase due to the PEF treatment was measured with temperature sensors (test 735, Testo AG Sales, Lenzkirch, Germany).

Example 3: Microbial Inactivation by PEF Treatment

*Escherichia coli* (ATCC 35218) and *Listeria innocua* (DSM20649), two microorganism strains with different gram charge properties were selected for the trials.

The coliforms were cultivated in 200 mL Tryptone Soja Broth (CM, Oxoid limited, Hampshire, UK) while being shaken for 24 hours at 37°C. After the enrichment, the microorganism suspension was added to the preheated milk and PEF treatment as described in Example 2.

The treated samples were diluted on selective agar (Flurocult MacCONKEY agar, Merck, Darmstadt, Germany). After incubation for 24 hours at 37°C the colony forming units per gram raw milk (cfu/g) were counted.

The gram positive *L.innocua* was cultivated in 200 mL One Bouillon Basis (CM1066B; Oxoid Limited; Hampshire; UK.) for 24 h at 37 °C. After the inoculation and the treatment, the samples were diluted in Maximum Recovery Diluent solution (CM0733; Oxoid Limited; Hampshire; UK.) and spread on Palcam Agar Basis (CM0877B; Oxoid Limited; Hampshire; UK.). The inoculated petri dishes were stored for 48 h at 37 °C, before counting the colony forming units per gram.

For the shelf life test, the total viable count was analyzed. Therefore, the raw milk was not inoculated with any microorganisms. The cooled samples (4 °C) were diluted in Maximum Recovery Diluent (CM0733, Oxoid Limited, Hampshire; UK.) and spread out on Plate Count Agar (CM0463B, Oxoid Limited, Hampshire, UK.). After 3 days storage at 30°C the total viable count in colony forming units per gram (cfu/g) can be determined.

The results can be seen in **Figures 7- 10.** Figures 7A and 7B compare the effect of the starting temperature of the raw milk on the microbial inactivation of *E. coli* and *L. innocua,* respectively, in dependence of the specific energy applied. For Figs. 7A and B, a colinear treatment chamber with 10 mm diameter, without inset was used. Inactivation is shown as log (N/N$_0$), N and No being the microbial count (cfu/g) after and before the treatment, respectively. It can be seen that the start temperature of the raw milk had an impact on the extent or efficiency of inactivation, with a start temperature of 30°C resulting in the most significant microbial inactivation. As a result, for all further experiments, the start temperature of the raw milk was set to 30°C.

**Figure 8:** Shows the inactivation of *E. coli* and *L. innocua* in dependence of specific energy with the start temperature of raw milk being 30°C and two colinear treatment chambers of 10 mm diameter and torpedo inset being used (Figs. 4 and 6). A vertical line at a specific energy of 244 kg/kJ indicates that at this energy, the microorganisms are inactivated below detection limit. As will be seen from the further examples, a substantial amount of bioactive proteins remains native at this amount of specific energy.

**Figures 9 A and 9 B** compare the effects of the treatment chamber design and on microbial inactivation of *E. coli* and *L. innocua,* respectively, in dependence of specific energy. It can be seen that the colinear treatment chamber comprising the inside element resulted in the most efficient inactivation. In other words, the latter treatment chamber required the lowest energy input to achieve a given inactivation. The maximum inactivation is a reduction of 5.5 log. The horizontal line in the graph at -5.5 log represents the detection limit, which means that below this line, viable counts are no longer detected.

**Figure 10A and 10 B** shows microbial inactivation effect (of *E. coli* and *L. innocua,* respectively) in dependence of the end temperature of the milk after the PEF treatment. Temperature increase is due to increases of specific energy applied. The impact of the treatment chamber design on the end temperature becomes clearly apparent. The results show that the end temperature is not only dependent on the specific energy applied, but also on the design of the treatment chamber, and that lower end temperatures may be sufficient to obtain important inactivation. The field concentration treatment chamber leads to the highest end temperature, which is why the present invention preferably does not use this kind of treatment chamber. On the other hand, the lowest end temperature was measured when the colinear treatment chamber with in an inside element was used. **Table 1** below shows the end temperature of a PEF treatment with a specific energy in the colinear treatment chamber using an inner element in the form of an inset.

**Table 1:** End temperature of raw milk and microbial inactivation following PEF treatment in a treatment chamber with 10 mm diameter and the inset of Figure 6

| Specific energy [kJ/kg] | End temperature [°C] | Inactivation E. coli [log N/No] | Standard deviation | Inactivation L. innocua [log N/No] | Standard deviation |
|---|---|---|---|---|---|
| 304,3 | 72,1 | -6,2 | 0,0 | -5,9 | 0,0 |
| 229,9 | 62,1 | -6,2 | 0,0 | -5,9 | 0,0 |
| 128,4 | 51,2 | -4,9 | 0,2 | -1,6 | 0,2 |
| 74,5 | 39,2 | -1,7 | 0,4 | -0,9 | 0,3 |

It is noted that N is the cell count (cfu) after the PEF treatment and No the cell count before treatment. As can be seen, the PEF treatment in accordance with the invention achieves microbial inactivation of 5 log or more.

Based on the trials done in Examples 2-3, the most favourable conditions for the PEF treatment were established. It is found that treatment chamber design, specific energy applied, and start temperature have an impact on the outcome of the PEF treatment. Based on these results, the colinear treatment chamber of 10 mm and a "torpedo" inset was used, the start temperature was generally set to 30°C, pulse duration was 20 $\mu$s, the field strength 12 kV/cm, and the raw milk was subjected to a flow rate of 30 kg/hour against a counter pressure of 2 bars. These are the preferred PEF treatment parameters.

Example 3: Effect of PEF Treatment on pH value, conductivity and colour of raw milk

The pH value of raw milk (6.9) was not affected by the PEF treatment over a specific energy range of 70 to 373 kJ/kg. The conductivity of raw milk (3.9) remained unchanged by the PEF treatment up to a specific energy of about 309-310 kJ/kg. At higher specific energies, a reduction of the conductivity was observed (about 3.75 at 344 kJ/kg and 3.25 at 373 kJ/kg).

Experiments in which the L* factor (lightness / darkness) is determined reveal that there are no perceivable colour changes of raw milk due to PEF treatment at specific energies that are in the range of about 250 to 350 kJ/kg.

Example 4: Influence of PEF treatment on bioactive substances in raw milk

*4.1 Material and Methods*

Five bioactive substances in raw milk were analyzed by using ELISA test kits. The results were obtained using an ELISA reader (EL800, Bio-Tek Instruments; Winooski; USA) and the Software KCjunior (KCjunior; Bio-Tek Instruments; Winooski; USA).

After the PEF treatment, the samples were frozen (freezing did not show to affect content of active proteins). Before analysis, samples were centrifuged at 4 °C and 10000 U/min (10621*g) for 10 min. The supernatant, which contains most of the fat, was discared and the fluid phase was used for further investigation. ELISA analysis were performed according to the manufacturer's instructions.

Active lactoferrin was quantified using the ELISA test from Bethyl Laboratories (Lactoferrin ELISA Quantitation Set; Cat. No. E10-126; Bethyl Laboratories Inc.; Montgomery; USA) and the solutions, which are required (ELISA stop solution, Cat. No. E115; TMB Peroxidase Substrate (Solution A+B), Cat. No. E102; Microtiter Plates, Cat. No. C3041; Bethyl Laboratories, Inc.; Montgomery; USA), were used. The analysis was and carried out as described in the instruction kit.

For the analysis of the other bioactive substances, the following ELISA kits were used: IgA: Bovine IgA ELISA kit E11-121; Bethyl laboratories Inc.; Montgomery; USA IgG: Bovine IgG ELISA Kit E11-118; Bethyl laboratories Inc.; Montgomery; USA TGF-beta 1: Multispecies TGF-beta 1 ELISA; ibt-immunological & biochemical test systems GmbH; Reutlingen; G.

TGF-beta 2: Multispecies TGF-beta 2 ELISA; ibt-immunological & biochemical test systems GmbH; Reutlingen; G. All analysis were carried out according to the kit instructions.

*4.2 PEF treatment effect on lactoferrin content*

Using the preferred PEF treatment parameters established in Example 3, trials were conducted in order to assess the effect of the PEF treatment on the presence of lactoferrin. For these trials, all process parameters were constant with the exception of specific energy.

As can be seen in Figure 11, lactoferrin is sensitive to the PEF treatment and amounts decrease with increasing specific energy. However, at a specific energy of 244 kJ/kg (vertical line in the graph), which corresponds to the energy needed for inactivation of both, *E. coli* and *L. innocua,* more than about 85% (64 mg/L) of the original lactoferrin (76 mg/L) is still detectable by ELISA and therefore present in a native and thus in the active form for the purpose of the present invention. Amounts of lactoferrin start decreasing more importantly at specific energies above about 280-300 kJ/kg.

*4.3 PEF treatment effect on IgA content*

As can be seen in Figure 12, following PEF treatment with a specific energy of 244 kJ/kg (vertical line in the graph), which corresponds to the energy needed for inactivation of both, *E. coli* and *L. innocua,* more than about 56% (77.4 $\mu$g/mL) of the original IgA (136.3 $\mu$g/mL) is still detectable by ELISA and therefore present in a native, thus active, form.

*4.4 PEF treatment effect on IgG content*

As can be seen in Figure 13, following PEF treatment with a specific energy of 244 kJ/kg (vertical line in the graph), which corresponds to the energy needed for inactivation of both, *E. coli* and *L. innocua,* more than about 80% (703 $\mu$g/mL) of the original IgG present in raw milk (868 $\mu$g/mL) is still detectable by ELISA and therefore present in a native, thus active, form.

*4.5 PEF treatment effect on TGF-$\beta$1 content*

As can be seen in Figure 14, following PEF treatment with a specific energy of 244 kJ/kg (vertical line in the graph), which corresponds to the energy needed for inactivation of both, *E. coli* and *L. innocua,* more than about 89% (0.34 ng/mL) of the original TGF-$\beta$1 present in raw milk (0.38 ng/mL) is still detectable by ELISA and therefore present in a native, thus active, form. In general, over the whole range of specific energy, the TGF-$\beta$1 content fluctuates around an average value of 0.35 ng/mL. TGF-$\beta$1 content is not substantially affected by the PEF treatment.

*4.6 PEF treatment effect on TGF-$\beta$2 content*

As can be seen in Figure 15, TGF-$\beta$2 content is not substantially affected by the PEF treatment. Following PEF treatment with a specific energy of 244 kJ/kg (vertical line in the graph), which corresponds to the energy needed for inactivation of both, *E. coli* and *L. innocua,* no significant decrease of the original TGF-$\beta$2 present in raw milk (41.4 ng/mL) was detected by ELISA.

In conclusion the PEF treatment in accordance with the present invention is suitable to effectively reduce microbial load in a liquid or viscous composition. At the same time, the treatment does not substantially destroy or does not destroy completely bioactive proteins or other molecules that are naturally present in raw milk. Important amounts of these bioactive molecules remain native/active in spite of the PEF treatment in accordance with this invention.

**Figure 16** summarises the results of this example by showing the effect of a PEF treatment that is suitable to significantly reduce microbial load on the content of different bioactive molecules.

<u>Example 5: Shelf-life of PEF treated composition</u>

The shelf life of raw milk and PEF treated raw milk was analysed and compared (see procedure in Example 3).

Different specific energies were applied: 0 (raw milk), 65, 210, 244 and 314 kJ/kg, respectively. The results are shown in **Figure 17.** As can be seen all samples with the exception of untreated raw milk and milk PEF treated at 65 kJ/kg presented viable cell counts below $10^5$ cfu/g over a shelf life of 14 days at 4°C. The latter two samples showed high cell counts after 4 days, and, due to the high bacterial growth, the experiment has been stopped for these samples and no further data is reported. The shelf life of untreated milk and milk treated at 65 kJ/kg is thus below four days at 4°C. For the other treated samples, a shelf life of 14 days or more at 4°C is obtained.

**Claims**

1. A method for reducing the microbial load of a liquid or viscous composition comprising one or more bioactive molecules naturally occurring in milk, the method comprising the steps of subjecting said composition to a pulsed electric field (PEF) treatment, wherein in said PEF treatment, said composition is exposed to a specific energy of 600 or less kJ per kg composition, wherein said composition is exposed to a PEF with a field strength of 10 to 20 kV/cm.

2. The method of claim 1, wherein in said PEF treatment, a pulse duration of 10 $\mu$s or more, preferably 15 $\mu$s or more are applied.

3. The method of any one of the preceding claims, wherein in said PEF treatment, square wave electric pulses and/or bipolar pulses are applied.

4. The method of any one of the preceding claims, which is a continuous method and/or in which said composition is continuously subjected to said PEF treatment.

5. The method of any one of the preceding claims, wherein a temperature of said composition, before subjection to said PEF treatment, is set to a temperature of 20-45°C.

6. The method of any one of the preceding claims, wherein said PEF treatment is applied in one or more colinear treatment chambers having a lumen, wherein said composition is continuously guided through said lumen of said colinear treatment chamber, and wherein an inside element is provided in said lumen, such that, in said treatment chamber, said composition is guided around said inside element.

7. The method of any one of the preceding claims, wherein said composition comprises or consists substantially of one or more selected from the group consisting of whole milk, semi-skimmed milk, skimmed milk, colostrum, reduced fat milk, low fat milk, fat-free milk, whey (milk plasma), such as sweet whey or acid whey, milk-based drink, yoghurt, frozen yoghurt, a yoghurt drink, ice cream, cream, butter, fresh cheese, curd, and cheese, powders or otherwise dried forms of any one of the aforementioned, and compositions comprising combinations of two or more of the aforementioned.

8. The method of any one of the preceding claims, wherein said one or more bioactive molecules are selected independently from native proteins, bioactive lipids, sialic acid, nucleotides, oligosaccharides, amino acids, taurine and vitamins naturally occurring in milk.

9. The method of any one of the preceding claims, wherein said one or more bioactive molecule is selected from bioactive proteins, said protein being selected from antimicrobial factors, immunoglobulins, growth factors, cytokines and/or pro-/anti-inflammatory factors, chemokines, enzymes, including digestive enzymes, protein hormones, transporters, glycomacropeptide, $\beta$-lactoglobulin, $\alpha$-lactalbumin, milk fat globule membrane proteins and combinations of two or more of the aforementioned, wherein, following the step of subjecting said composition to a PEF treatment, at least 30% of said protein is present in a native form.

10. The method of any one of the preceding claims, wherein a reduction of the microbial load achieved is at least 4 log.

11. A composition comprising bioactive molecules, the composition being obtainable by the method of any one of the preceding claims.

12. A pulsed electric field (PEF) treated composition, which is microbiologically safe and which comprises one or more proteins naturally occurring in milk, wherein at least 30% of the respective protein is in a native form.

13. The composition of claim 12, wherein said protein is selected from antimicrobial factors, immunoglobulins, growth factors, cytokines and/or pro-/anti-inflammatory factors, chemokines, enzymes, including digestive enzymes, protein hormones, transporters, glycomacropeptide, $\beta$-lactoglobulin, $\alpha$-lactalbumin, milk fat globule membrane proteins and combinations of two or more of the aforementioned, wherein at least 30% of said protein is present in a native form.

14. The composition of any one of claims 12 - 13, wherein said one or more proteins are selected from immunoglobulins, lactoferrin, $\beta$-lactoglobulin, $\alpha$-lactalbumin and TGF-$\beta$.

15. The composition of any one of claims 12 - 14, which comprises lactoferrin, wherein at least 75% of the total lactoferrin in said composition is present in native form.

16. The composition of any one of claims 12 - 15, which comprises one or more selected from the group of colostrum, whole milk, semi-skimmed milk, skimmed milk, colostrum, reduced fat milk, low fat milk, fat-free milk, whey (milk plasma), such as sweet whey or acid whey, milk-based drink, yoghurt, frozen yoghurt, a yoghurt drink, ice cream, cream, butter, fresh cheese, curd, and cheese, powders or otherwise dried forms of any one of the aforementioned, and compositions comprising combinations of two or more of the aforementioned.

EP 2 543 254 A1

Figure 1

Figure 2

28

Figure 3

Figure 4

Figure 5

Figure 6

*E.coli*

Figure 7 A

*L.innocua*

Figure 7 B

Figure 8

*E.coli*

**Figure 9 A**

*L.innocua*

**Figure 9 B**

*E.coli*

**Figure 10 A**

*L.innocua*

**Figure 10 B**

Figure 11

Figure 12

Figure 13

Figure 14

Figure 15

Figure 17

Figure 16

**Europäisches Patentamt**
**European Patent Office**
**Office européen des brevets**

# EUROPEAN SEARCH REPORT

Application Number

EP 11 17 3191

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | M. WALKING-RIBEIRO ET AL.: INT. J. FOOD MICROBIOL., vol. 144, 2011, pages 379-386, XP27557681, | 1-4,7-16 | INV. A23C3/033 A23L3/32 |
| Y | * abstract * * page 380, right-hand column * * page 382 * * pages 384-385 * | 5 | |
| X | JP 2000 139432 A (NISSIN ELECTRIC CO LTD) 23 May 2000 (2000-05-23) | 1-4,7-16 | |
| Y | * abstract * * claims 1-3,6 * * paragraphs [0001], [0002], [0014], [0017], [0020], [0024], [0027], [0043] - [0044], [0067] - [0069] * | 5 | |
| X | PINA-PEREZ M C ET AL: "Sub-lethal damage in Cronobacter sakazakii subsp. sakazakii cells after different pulsed electric field treatments in infant formula milk", FOOD CONTROL, BUTTERWORTH, LONDON, GB, vol. 20, no. 12, 1 December 2009 (2009-12-01), pages 1145-1150, XP026139818, ISSN: 0956-7135, DOI: 10.1016/J.FOODCONT.2009.03.006 [retrieved on 2009-03-24] | 1-4,7-16 | TECHNICAL FIELDS SEARCHED (IPC) A23C A23L |
| Y | * abstract * * page 1146 * * table 1 * * figure 1 * * page 1149 - page 1150 * | 5 | |

-/--

The present search report has been drawn up for all claims

| Place of search | Date of completion of the search | Examiner |
|---|---|---|
| Munich | 4 November 2011 | Couzy, François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 17 3191

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SHENGLANG JIN: "Application of high intensity pulsed electric fields for enhancing the quality of raw milk", MECHANICAL AND ELECTRONICS ENGINEERING (ICMEE), 2010 2ND INTERNATIONAL CONFERENCE ON, IEEE, PISCATAWAY, NJ, USA, 1 August 2010 (2010-08-01), pages V2-275, XP031739785, ISBN: 978-1-4244-7479-0 * pages V2-277 * * table III * | 5 | |
| X | ODRIOZOLA-SERRANO I ET AL: "Comparative Study on Shelf Life of Whole Milk Processed by High-Intensity Pulsed Electric Field or Heat Treatment", JOURNAL OF DAIRY SCIENCE, AMERICAN DAIRY SCIENCE ASSOCIATION, US, vol. 89, no. 3, 1 March 2006 (2006-03-01), pages 905-911, XP026944961, ISSN: 0022-0302, DOI: 10.3168/JDS.S0022-0302(06)72155-5 [retrieved on 2006-03-01] * abstract * * page 906 * * pages 908-910 * | 11-16 | |

-/--

TECHNICAL FIELDS
SEARCHED       (IPC)

The present search report has been drawn up for all claims

| Place of search | Date of completion of the search | Examiner |
|---|---|---|
| Munich | 4 November 2011 | Couzy, François |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

Europäisches
Patentamt

European
Patent Office

Office européen
des brevets

# EUROPEAN SEARCH REPORT

Application Number

EP 11 17 3191

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZULUETA A ET AL: "Ascorbic acid in orange juice-milk beverage treated by high intensity pulsed electric fields and its stability during storage", INNOVATIVE FOOD SCIENCE AND EMERGING TECHNOLOGIES, ELSEVIER, AMSTERDAM, NL, vol. 11, no. 1, 1 January 2010 (2010-01-01), pages 84-90, XP026825036, ISSN: 1466-8564 [retrieved on 2009-07-26] * table 11 * | 11 | |
| A | BENDICHO S ET AL: "Milk processing by high intensity pulsed electric fields", TRENDS IN FOOD SCIENCE AND TECHNOLOGY, ELSEVIER SCIENCE PUBLISHERS, GB, vol. 13, no. 6-7, 1 June 2002 (2002-06-01) , pages 195-204, XP004394595, ISSN: 0924-2244, DOI: 10.1016/S0924-2244(02)00132-2 * the whole document * | 1-16 | TECHNICAL FIELDS SEARCHED (IPC) |

The present search report has been drawn up for all claims

| Place of search | Date of completion of the search | Examiner |
|---|---|---|
| Munich | 4 November 2011 | Couzy, François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 17 3191

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2011

| Patent document cited in search report | Publication date | Patent family member(s) | Publication date |
|---|---|---|---|
| JP 2000139432 A | 23-05-2000 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080317823 A
- EP 2011051149 W
- EP 0818529 A
- US 5116953 A
- DE 102010001279

### Non-patent literature cited in the description

- **M. WALKING-RIBEIRO et al.** *Int. J. Food Microbiol.,* 2011, vol. 144, 379-386
- current knowledge on applications of pulsed electric field technology for the food industry. **TOEPFL, S. ; HEINZ, V ; KNORR, D.** Pulsed Electric Field Treatment of Foods. Elsevier, 2006, 197-221
- **ZHANG et al.** *J. Food Ing.,* 1995, vol. 25, 261-81
- **PALMANO et al.** *Journal of Chromatography,* 2002, vol. 947, 307-311
- **DESMAZEAUD.** Bulletin of International Dairy Federation. 1993, vol. 284, 29-42
- **INDYK et al.** *International Dairy Journal,* 2005, vol. 15 (5), 429-438
- **B. Y. FONG ; C. S. NORRIS.** Quantification of Milk Fat Globule Membrane Proteins Using Selected Reaction Monitoring Mass Spectrometry. *J. Agric. Food Chem.,* 2009, vol. 57, 6021-6028
- Verordnung über Hygiene- und Qualitätsanforderungen an Milch und Erzeugnisse auf Milchbasis (Milchverordnung. *Bundesgesetzblatt Jahrgang,* 20 July 2000, vol. I (26), 1178
- *Bundesgesetzblatt Jahrgang,* 12 November 2004, vol. I (58), 2794